(19) **Europäisches Patentamt**

**European Patent Office**

**Office européen des brevets**

(11) **EP 0 781 040 B1**

(12) **FASCICULE DE BREVET EUROPEEN**

(45) Date de publication et mention
de la délivrance du brevet:
**06.06.2001 Bulletin 2001/23**

(51) Int Cl.⁷: **H04N 5/44**

(21) Numéro de dépôt: **96402776.7**

(22) Date de dépôt: **18.12.1996**

(54) **Circuit pour réaliser un filtrage de Nyquist numérique de signaux à fréquence intermédiaire FI**

Schaltung zur digitalen Nyquistfilterung von Zwischenfrequenzsignalen

Circuit for implementing a digital Nyquist filtering of signals with intermediate frequency

(84) Etats contractants désignés:
**DE FR GB IT**

(30) Priorité: **22.12.1995 FR 9515401**

(43) Date de publication de la demande:
**25.06.1997 Bulletin 1997/26**

(73) Titulaire: **THOMSON multimedia**
**92648 Boulogne Cédex (FR)**

(72) Inventeurs:
• **Boie, Werner**
**92050 Paris la Defense Cedex (FR)**
• **Boul Sleiman, Elias**
**92050 Paris la Defense Cedex (FR)**

(74) Mandataire: **Ruellan-Lemonnier, Brigitte et al**
**THOMSON multimedia,**
**46 quai A. Le Gallo**
**92648 Boulogne Cédex (FR)**

(56) Documents cités:
**EP-A- 0 651 526**     **EP-A- 0 683 607**
**US-A- 4 594 607**     **US-A- 4 789 897**
**US-A- 5 337 091**

EP 0 781 040 B1

## Description

L'invention est relative à un circuit pour réaliser un filtrage de Nyquist numérique de signaux à fréquence intermédiaire FI.

L'invention concerne plus particulièrement le filtrage numérique de signaux de télévision à fréquence intermédiaire FI provenant d'un dispositif d'accord (tuner).

Dans les récepteurs actuels de télévision, le filtre de Nyquist dans le circuit à fréquence intermédiaire FI représente une partie complexe de traitement du signal. Il est réalisé sous forme analogique à l'aide d'un dispositif SAW (filtre à ondes de surface), avec une caractéristique sélectionnant une bande étroite, ce filtre précédant l'étage de démodulation vidéo analogique. Bien que la relation coût/performance des filtres SAW puisse être considérée comme excellente, il ne peut y avoir intégration de tels filtres avec des circuits CMOS sur la même puce à des coûts raisonnables. En vue d'une solution avec système entièrement numérique, la technique analogique doit par conséquent être abandonnée en faveur d'une technique numérique.

On a donc songé à une conception de filtre numérique à réponse impulsionnelle finie RIF offrant des performances équivalentes à celles des filtres SAW.

En matière de traitement de signaux vidéo, une exigence primordiale est que le comportement pour la phase des signaux passant par un filtre soit le même pour toutes les fréquences.

Un filtre RIF à phase linéaire pourrait permettre de réaliser un filtrage numérique répondant à cette exigence. Malheureusement, un tel filtre RIF nécessiterait un nombre très élevé de coefficients de l'ordre de 100 ou plus, conduisant à un coût prohibitif.

L'invention a donc pour but, surtout, de fournir un circuit permettant un filtrage de Nyquist numérique de signaux à fréquence intermédiaire FI, en particulier de signaux vidéo, qui soit d'un coût économique acceptable, tout en assurant un comportement pour la phase des signaux qui soit le même ou sensiblement le même pour toutes les fréquences.

Les documents EP-A-0 683 607 et US-A-4 789 897 divulguent des circuits pour filtrage numérique de signaux vidéo comprenant, en série, un préfiltre analogique, un convertisseur analogique/numérique, et un filtre numérique de Nyquist.

L'invention a consisté à combiner au moins un filtre RIF simplifié, et donc moins coûteux, mais ne permettant pas à lui seul d'atteindre le résultat souhaité, avec deux filtres à réponse impulsionnelle infinie RII placés en cascade, l'un de ces filtres pouvant avoir un spectre conjugué de l'autre filtre RII.

Un filtre RII est de réalisation moins coûteuse qu'un filtre RIF, mais ne permet pas de satisfaire à l'exigence de phase proportionnelle à la fréquence. La combinaison avec un filtre conjugué permet de s'approcher de l'exigence de phase proportionnelle à la fréquence ; la combinaison avec le filtre RIF simplifié permet d'obtenir un résultat satisfaisant.

Selon l'invention, un circuit pour réaliser un filtrage de Nyquist de signaux à fréquence intermédiaire FI, notamment de signaux vidéo, comprend un préfiltre analogique, un convertisseur A/D (analogique/numérique) et un filtre de Nyquist, le préfiltre analogique étant propre à sélectionner le canal souhaité et étant placé en amont du convertisseur A/D ; le filtre de Nyquist étant est réalisé sous forme d'un filtre numérique placé en aval du convertisseur A/D et étant caractérisé en ce qu'il est composé d'au moins deux filtres RII placés en cascade, l'un de ces filtres RII étant un filtre non-causal de préférence à spectre conjugué de l'autre filtre RII étant causal, et d'un filtre RIF en série propre à corriger le filtrage résultant des filtres RII et à fournir un signal de sortie dont la phase est proportionnelle à la fréquence.

De préférence chaque filtre RII est un filtre demi-Nyquist ou sensiblement demi-Nyquist.

Les filtres RII et RIF sont combinés de manière à réduire la dynamique de signal et à utiliser partout sensiblement la même dynamique. Avantageusement le filtre RII non-causal comprend des moyens d'échantillonnage du signal vidéo, des moyens pour découper le signal vidéo échantillonné en sections de longueur de temps prédéterminée LT, des moyens d'inversion dans le temps des échantillons des sections découpées avant filtrage, et des seconds moyens d'inversion dans le temps des échantillons filtrés. De préférence, chaque moyen d'inversion dans le temps des échantillons avant et après filtrage est constitué par une pile LIFO (dernier entré, premier sorti).

De préférence, le filtre RII non-causal comporte deux voies en parallèle, chaque voie comportant un filtre numérique RII identique, et étant reliée, en amont, à un moyen d'aiguillage, fonctionnant à un rythme d'horloge égal à L fois la période d'échantillonnage T, prévu pour relier alternativement une voie et son filtre à la sortie de la LIFO située en amont et pour relier l'autre voie et son filtre à une source de zéros, tandis qu'un deuxième moyen d'aiguillage situé en aval des deux filtres RII parallèles est prévu pour relier alternativement la sortie du filtre qui reçoit les échantillons de la section découpée renversés dans le temps, à une cellule à retard introduisant un retard de 2LT, la sortie de cette cellule à retard étant reliée à une entrée d'un additionneur dont une autre entrée est reliée, par le deuxième moyen d'aiguillage, à la sortie du filtre qui reçoit les zéros, la sortie de l'additionneur étant reliée à une deuxième pile LIFO qui rétablit l'ordre dans le temps des échantillons filtrés.

Le nombre L est choisi de telle sorte que la durée LT soit suffisante pour que l'amplitude du signal filtré à la fin du passage de la séquence de zéros soit négligeable.

De préférence le filtre RIF et le filtre combiné RII (constitués de plusieurs filtres RII) sont décomposés en des cellules de filtrage de telle sorte que le polynôme de la fonction de transfert globale pour chaque filtre RIF et RII soit égal au produit de plusieurs polynômes d'ordre plus petit, la fonction de transfert globale du circuit étant formée par une fraction dont le numérateur est un polynôme correspondant au filtre RIF, tandis que le dénominateur est un polynôme correspondant au filtre combiné RII.

Avantageusement le filtre RIF est décomposé en cinq cellules ayant chacune une fonction de transfert d'ordre quatre, tandis que le filtre RII est décomposé en trois cellules de fonction de transfert d'ordre deux.

Avantageusement, les coefficients des cellules du filtre RIF sont les suivants :

$$\beta^{(1)}_k = [377, 638, 1024, 638, 377]$$
$$\beta^{(2)}_k = [94, 349, 512, 349, 94]$$
$$\beta^{(3)}_k = [71, 177, 256, 177, 71]$$
$$\beta^{(4)}_k = [34, 159, 256, 159, 34]$$
$$\beta^{(5)}_k = [19, -155, 512, -155, 19],$$

tandis que les coefficients des cellules du filtre RII sont les suivants :

$$\alpha^{(1)}_k = [76, 128, 63]$$
$$\alpha^{(2)}_k = [128, 82, 114]$$
$$\alpha^{(3)}_k = [128, 62, 66].$$

L'invention consiste, mises à part les dispositions exposées ci-dessus, en un certain nombre d'autres dispositions dont il sera plus explicitement question ci-après à propos d'un exemple particulier décrit avec référence aux dessins ci-annexés, mais qui n'est nullement limitatif.

La figure 1, de ces dessins, est un schéma d'un circuit de traitement de signaux vidéo à fréquence intermédiaire FI provenant d'un dispositif d'accord (tuner), comportant le circuit de filtrage conforme à l'invention.

La figure 2 est un schéma du signal FI analogique à la sortie du préfiltre analogique.

La figure 3A est un diagramme schématique représentant les signaux à l'entrée du convertisseur A/D.

Les figures 3B et 3C illustrent les effets de l'échantillonnage sur le signal de la figure 3A.

La figure 3D est un diagramme illustrant les signaux à l'entrée du filtre de Nyquist.

La figure 4A reprend le diagramme de la figure 3D.

La figure 4B est un diagramme illustrant les seuls signaux fournis à la sortie du filtre de Nyquist.

La figure 4C illustre la régénération de la porteuse image.

La figure 4D est un diagramme illustrant les signaux après régénération de la porteuse image, avec le diagramme du filtre passe-bas.

La figure 4E est un schéma des signaux à la sortie du filtre passe-bas.

La figure 5 est un schéma illustrant la réalisation du filtre de Nyquist selon l'invention.

La figure 6 est un schéma illustrant l'inversion dans le temps d'une suite d'échantillons par une pile LIFO.

La figure 7 est un schéma illustrant la réalisation d'un filtre RII non-causal.

La figure 8 est un ensemble de schémas simplifiés illustrant le traitement d'un signal par le filtre RII non-causal de la figure 7.

La figure 9 est un ensemble de diagrammes temporels illustrant, sous une autre forme que la figure 8, le fonctionnement du filtre non-causal de la figure 7.

La figure 10 est un schéma de l'ensemble de filtrage RII en cascade comprenant le filtre non-causal de la figure 7 et le filtre RII causal à spectre conjugué.

La figure 11A est un diagramme illustrant les réponses en fréquence du filtre RIF et du filtre RII.

La figure 11B illustre également les réponses en fréquence des filtres mais avec une échelle logarithmique en ordonnée, la somme des deux filtres étant en outre représentée sur ce schéma.

La figure 12A illustre les réponses en fréquence de chacune des trois cellules individuelles du filtre RII.

La figure 12B illustre la réponse en fréquence de chacune des cinq cellules du filtre RIF.

Les figures 13A à 13C illustrent les réponses en fréquence de diverses combinaisons des cellules de filtre RII et de filtre RIF.

Les figures 14A à 14C illustrent les réponses impulsionnelles de l'ensemble de filtrage à la fréquence caractéristique des trois cellules du filtre RII.

La figure 15A donne le résultat de convolution des trois cellules de filtre RII.

La figure 15B est un diagramme illustrant, avec une échelle en ordonnée multipliée par mille, la fin du signal résultat de convolution de la figure 15A.

La figure 16 est un schéma du filtre de Nyquist numérique selon l'invention.

La figure 17, est un schéma d'une variante de réalisation de filtre de Nyquist selon la figure 16.

Les figures 18A, et 18B sont des schémas de cellules de filtre RII.

Les figures 19A et 19B, enfin, sont des schémas de cellules de filtre RIF.

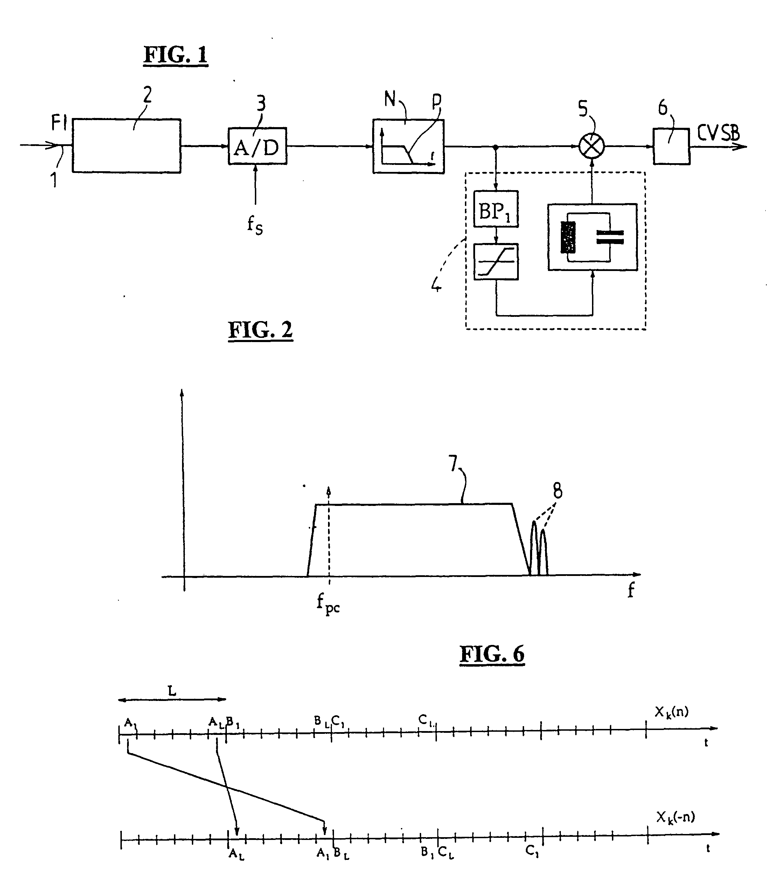

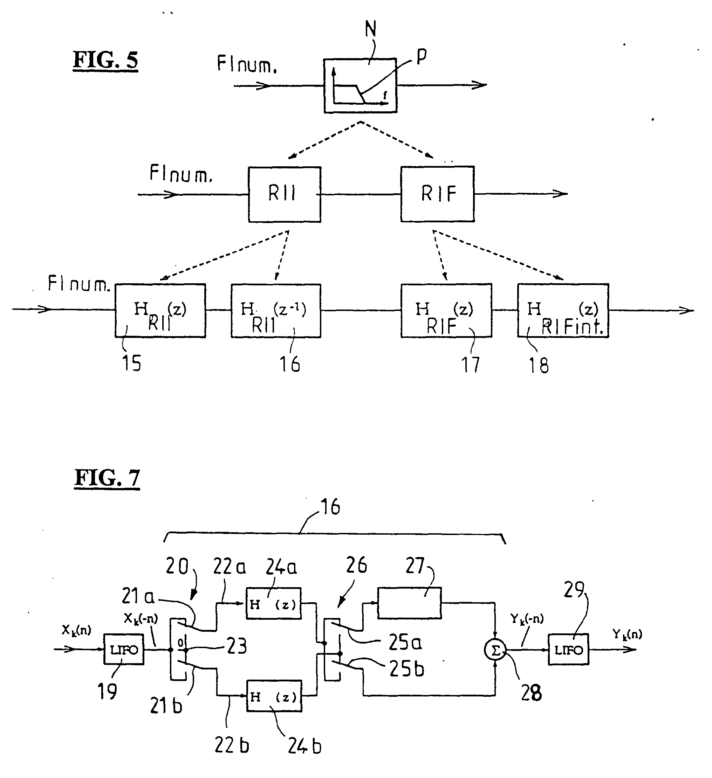

En se reportant à la figure 1 des dessins, on peut voir un circuit pour le traitement de signaux vidéo à fréquence intermédiaire FI provenant d'un dispositif d'accord (tuner) non représenté. La partie de circuit de la figure 1 comprend un filtre de Nyquist N numérique dont le schéma d'ensemble est donné sur la figure 5 et dont la description détaillée sera donnée plus loin, après un rappel de la définition du filtre de Nyquist.

L'analyse du fonctionnement du circuit FI montre une plage dynamique élevée pour le traitement des signaux analogiques FI. Pour réaliser la sélection du canal souhaité, parmi les signaux FI arrivant sur la ligne d'entrée 1, on dispose un préfiltre analogique 2 adaptable en largeur de bande. La sortie de ce préfiltre 2 est reliée à un convertisseur A/D (analogique/numérique) 3 qui travaille à une fréquence d'échantillonnage $f_S$. Les signaux numériques issus du convertisseur 3 sont envoyés au filtre de Nyquist N et une partie du signal sortant du filtre N est envoyée dans un circuit 4 de régénération de la porteuse image dont la sortie est reliée à une entrée d'un circuit multiplicateur 5. Une autre entrée du circuit 5 reçoit directement le signal provenant du filtre N. Le signal sortant du circuit 5 est envoyé à un filtre passe-bas 6 dont la sortie fournit le signal de bande latérale vidéo composite (CVBS).

La séparation entre la sélection de canal, réalisée par le préfiltre analogique 2, et le filtrage de Nyquist présente un avantage pour la commande automatique de fréquence (CAF) non montrée sur la figure 1 qui joue un rôle important pour la démodulation synchrone. Avec une position de la pente de Nyquist p sous commande numérique, une CAF peut beaucoup mieux fonctionner. Après la démodulation synchrone réalisée en aval du filtre N, et après le filtre passe-bas 6, le signal de bande latérale vidéo composite (CVBS) devient disponible.

La fréquence d'échantillonnage $f_S$, au niveau du convertisseur 3, est un paramètre important qui prédétermine la performance réalisable sous des conditions économiques. Son choix doit être effectué avec beaucoup de soin, comme il résulte des explications qui suivent, cette fréquence ne pouvant pas être délibérément choisie.

Pour une meilleure compréhension, le spectre du signal FI analogique sortant du préfiltre 2 est montré sur la figure 2 l'amplitude étant portée en ordonnée, et la fréquence en abscisse. Contrairement à la représentation habituelle des spectres FI, son orientation est inversée, les composantes à fréquence habituellement plus élevée correspondant à la bande vidéo 7 autour de la fréquence porteuse image $f_{pc}$ apparaissent ici comme étant les composantes à fréquence plus faible, tandis que les composantes de la bande son 8, à fréquence habituellement plus faible, apparaissent ici comme étant plus élevées. L'orientation inversée du spectre FI représenté sur la figure 2 est due au pré-traitement analogique, et est sans importance pour le problème traité.

L'examen du spectre FI obtenu suggère une certaine application d'une technique de sous-échantillonnage. Afin de tolérer dans une certaine mesure les imperfections du préfiltre analogique 2, concernant la suppression des canaux adjacents au canal désiré, la fréquence d'échantillonnage $f_S$ ne devrait pas être choisie trop petite. Un spectre de fréquences entièrement occupé dans lequel les spectres FI répétés, par suite de l'échantillonnage, ne laisseraient aucun intervalle de fréquence entre eux, devrait être évité. Des intervalles de fréquence espacés de manière égale entre les spectres répétés périodiquement seront obtenus si la fréquence d'échantillonnage $f_S$ satisfait à la condition

$$f_S = f_{FImax} + (f_{FImax} - 2B_{CH})/3$$

$$f_S = (4f_{FImax} - 2B_{CH})/3$$

avec

$$f_{FImax:norme\ B/G} = f_{PC:norme\ B/G} + f_{VSB:norme\ B/G} \quad f^{PC} = \text{fréquence de la porteuse}$$

$$f_{PC:norme\ B/G} = 38.9\ \text{MHz}, \quad f_{VSB:norme\ B/G} = 1.25\ \text{MHZ},$$

$$B_{CH:norme\ B/G} = 7\ \text{MHz}$$

$$f_{FImax:norme\ B/G} = 40.15\ \text{Mhz}$$

Il en résulte

$$f_S = 48.87 \text{ MHz.}$$

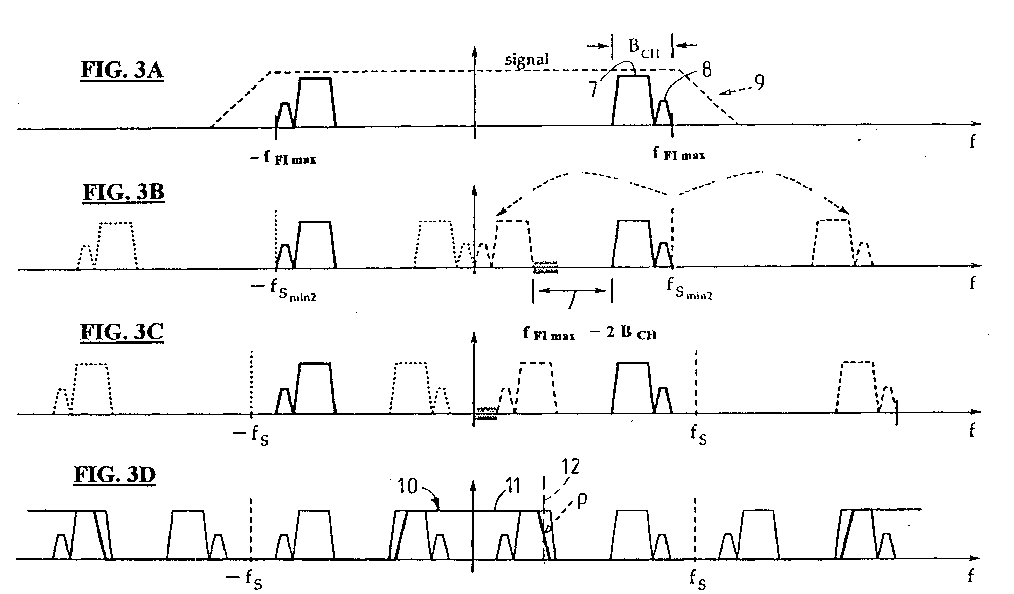

Les figures 3A à 3D donnent une illustration de la technique de sous-échantillonnage proposée. Le signal d'entrée du convertisseur A/D 3 est représenté par le signal FI sélectionné 7, 8 sur la figure 3A avec une largeur de bande finale de $B_{CH}$. On a représenté sous forme d'une ligne trapézoïdale en tirets, sur la figure 3A, la largeur de bande nécessaire d'un échantillonneur-bloqueur appartenant au convertisseur 3. Sur les figures 3A à 3D, comme sur la figure 2, on a porté en ordonnée l'amplitude du signal FI et en abscisse les fréquences. Lorsque la fréquence d'échantillonnage correspond à la fréquence FI maximale, soit $f_{FImax}$, l'échantillonnage à cette fréquence donne pour résultat le spectre illustré sur la figure 3B avec des intervalles inégaux entre les spectres répétés FI. La figure 3B représente déjà un cas extrême dans lequel l'intervalle de fréquence autour de la fréquence zéro diminue.

L'examen de l'intervalle de fréquence entre "la bande de base" et le premier spectre répété suggère que cet espace d'amplitude $f_{FImax.} - 2B_{CH}$ doit être partagé par tiers autour de la fréquence zéro comme montré sur la figure 3C. Par conséquent, la fréquence d'échantillonnage doit être augmentée de $(f_{FImax} - 2B_{CH})/3$ comme cela a été fait précédemment.

La fréquence Nyquist à 6 dB de la porteuse image résultante peut maintenant être calculée :

$$f_{6dB} = f_S - f_{PC} \text{ inversée}$$

avec

$$f_{PC} \text{ inversée} = f_{FImax} - B_{CH} + f_{VSB} = 34.4 \text{ MHz}$$

cela devient

$$f_{6dB} = 48.87 \text{ MHz} - 34.4 \text{ MHz} = 14.47 \text{ MHz.}$$

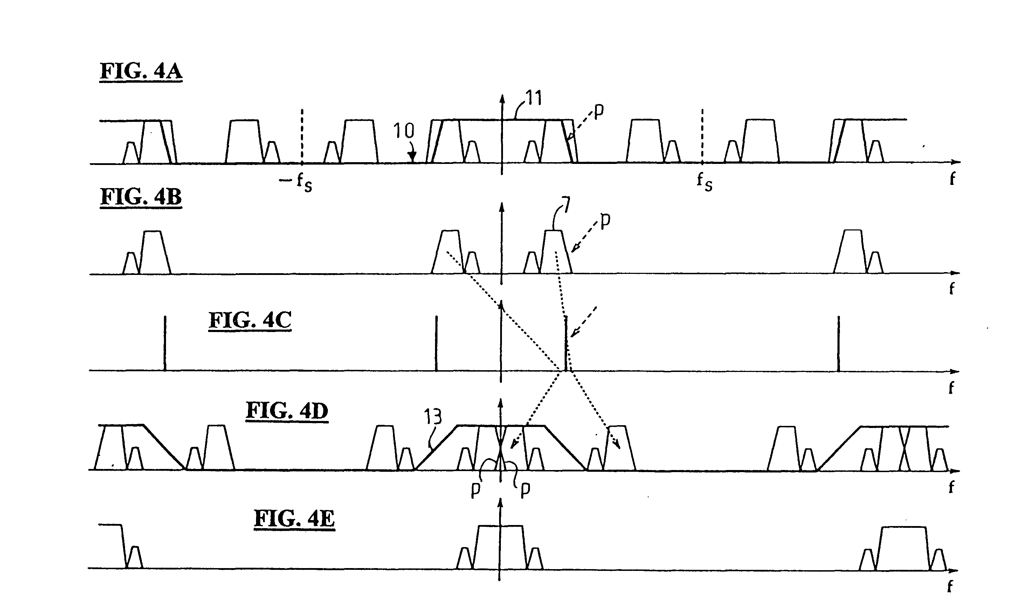

Une forme possible de la caractéristique du filtre de Nyquist numérique est représentée en trait épais continu 10 sur la figure 3D. On rappelle que la pente p qui limite la bande passante 11 du filtre de Nyquist vers les fréquences plus élevées coupe la fréquence porteuse ou sa transposée 12 à mi-hauteur. Ceci permet, comme expliqué pour la figure 4D, après démodulation régénération de la porteuse image, d'éviter une distorsion du signal.

Afin de permettre une démodulation synchrone ultérieurement, le filtre de Nyquist devrait également posséder une caractéristique de sur-échantillonnage qui supprime au moins le premier spectre répété FI.

Les figures 4A à 4E illustrent le processus qui permet d'aboutir, à la figure 4E au signal vidéo démodulé du canal sélectionné.

La figure 4A reprend la figure 3D et illustre le signal résultant après passage par le filtre de Nyquist dont le diagramme de réponse en fréquence est représenté par des traits épais comprenant des segments parallèles à l'axe des abscisses limités par des pentes p relativement raides coupant la porteuse à mi-hauteur. La figure 4B illustre le signal à la sortie du filtre de Nyquist, la bande vidéo 7 étant limitée par la pente de Nyquist p.

La figure 4C illustre la porteuse image régénérée.

La figure 4D illustre les signaux après démodulation, soumis à un filtrage passe-bas ayant une réponse en fréquence représentée par la courbe 13 en trait épais. On notera que les deux pentes de Nyquist p de bandes vidéo inversées autour de la fréquence zéro se coupent à mi-hauteur et permettent, par addition, d'obtenir un segment parallèle à l'axe des fréquences et d'éviter une distorsion.

La figure 4E montre précisément le signal de bande latérale vidéo composite reconstruit, avec les signaux son modulés, à la sortie du filtre passe-bas.

La figure 5 illustre schématiquement la réalisation du filtre de Nyquist selon l'invention. Le filtre N a été représenté à la première ligne de la figure 5. Une première indication sur la composition de ce filtre N est donnée par la deuxième ligne de la figure 5 où l'on voit que le filtre N comprend en série un filtre (ou ensemble de filtres) RII, à réponse impulsionnelle infinie et un filtre RIF à réponse impulsionnelle finie.

La troisième ligne de la figure 5 montre que le filtre RII, considéré dans son ensemble, se décompose en deux filtres RII en cascade 15, 16. Le filtre RIF peut également se décomposer en deux filtres RIF 17, 18 en cascade. Toutefois, le filtre 18 destiné au sur-échantillonnage n'est pas indispensable.

Un filtre RII offre, en général, pour les applications vidéo une caractéristique de retard de groupe inacceptable. Pour compenser la caractéristique de phase non linéaire du filtre RII 15, de fonction de transfert H(Z) ( avec Z = e$^{j\omega t}$), on prévoit un filtre 16 RII à spectre conjugué, en cascade, avec une fonctionnalité inversée dans le temps. Le filtre 16 doit donc être un filtre non-causal.

On rappelle que la propriété de causalité traduit le fait que dans un filtre réel la sortie ne peut précéder l'entrée dans le temps.

Le filtre 16 à spectre conjugué du filtre 15 doit présenter une propriété inverse de celle de causalité. La réalisation de ce filtre non causal va être expliquée un peu plus loin.

Le filtre RIF 17 et éventuellement le filtre RIF 18 sont conçus pour apporter une correction de fréquence aux filtres RII 15, 16 en cascade.

On considère maintenant l'ensemble de filtrage RII, avec le filtre non causal 16.

La fonction de transfert H$_{res}$(Z) résultant des deux filtres 15, 16 en cascade peut s'exprimer de la manière suivante :

$$H_{res}(Z) = H(Z)\ H(Z^{-1}) = H(Z)\ H(Z)^* = |H(Z)|^2$$

Cette fonction de transfert résultante correspondant à un nombre réel, la caractéristique de phase linéaire globale est alors assurée ce qui est une condition préalable absolument nécessaire pour les applications vidéo. Malheureusement, la fonction de transfert H(Z$^{-1}$), ou fonction de transfert non-causale, ne peut pas être réalisée dans sa forme idéale.

Selon l'invention, une approximation est rendue possible en utilisant une technique d'inversion de temps local et une méthode de convolution sectionnée en un seul passage.

Pour réaliser l'inversion dans le temps des signaux numériques X$_k$(n) on prévoit, comme montré sur la figure 7, une pile LIFO (dernier entré, premier sorti) 19 qui permet donc d'inverser dans le temps les échantillons A$_1$ ... A$_L$ d'une section de longueur, dans le temps, égale à LT, T étant la période d'échantillonnage dans le convertisseur A/D 3, lequel comporte les moyens d'échantillonnage du signal vidéo. Le nombre L d'échantillons pour une section sera précisé par la suite.

Ainsi, comme l'illustre le schéma de la figure 6, les échantillons A$_1$ ... A$_L$ de la section de signal X$_k$(n) entrant dans la pile 19, se retrouvent en ordre inversé dans le temps à la sortie de cette pile, comme montré sur la deuxième ligne de la figure 6 où le dernier échantillon entré A$_L$ est placé au début de la section sortante inversée ; le segment (ou échantillon) A$_1$ qui était au début de la section à l'entrée, se trouve, en sortie, placé à la fin de cette section. Il en est de même pour les échantillons des sections suivantes B$_1$ ... B$_L$, inversés en B$_L$ ... B$_1$ et pour C$_1$ ... C$_L$ inversés en C$_L$ ... C$_1$.

La figure 7 donne le schéma du filtre non-causal RII 16.

Ce filtre comporte la pile LIFO 19 déjà évoquée qui peut stocker L échantillons. La sortie de la pile 19 est reliée à un moyen d'aiguillage 20, schématiquement représenté, qui comprend deux éléments commutateurs 21a, 21b prévus respectivement sur deux voies parallèles 22a, 22b. Une source 23 pour émettre des signaux zéro est en outre prévue. La sortie de la pile 19 est reliée, en parallèle, à une borne de chacun des commutateurs 21a, 21b, tandis que la source 23 de zéros est reliée à l'autre borne de ces commutateurs. Ces commutateurs 21a, 21b fonctionnent à un rythme d'horloge dont la période est égale L fois la période T d'échantillonnage dans le convertisseur A/D 3. Le moyen d'aiguillage 20 peut prendre deux configurations : la première, illustrée sur la figure 7, relie la sortie de la pile 19 à la voie 22a et à l'entrée d'un filtre RII 24a ; dans cette configuration, l'autre commutateur 21b relie la source de zéros 23 à l'autre voie 22b qui est reliée à l'entrée d'un filtre RII 24b, avantageusement identique au filtre 24a. Les moyens d'aiguillage 20 peuvent prendre une deuxième configuration dans laquelle le commutateur 21a relie la source 23 à la voie 22a alors que le commutateur 21b relie la sortie de la pile 19 à la voie 22b.

La sortie du filtre 24a est reliée en parallèle à une borne d'un premier commutateur 25a et à une borne d'un deuxième commutateur 25b appartenant à un deuxième moyen d'aiguillage 26. La sortie du filtre 24b est reliée en parallèle aux deux autres bornes des commutateurs 25a, 25b. Le commutateur 25a est relié à l'entrée d'une cellule à retard 27 propre à introduire un retard de 2 L fois la période d'échantillonnage T du convertisseur 3 (soit 2 LT) ; la sortie de la cellule à retard 27 est reliée à une entrée d'un circuit additionneur 28. L'autre commutateur 25b est relié directement à une autre entrée du circuit additionneur 28. Le moyen d'aiguillage 26 fonctionne au même rythme d'horloge que le moyen d'aiguillage 20, les commutateurs 25a, 25b modifiant les connexions à ce rythme. Dans une première configuration du moyen d'aiguillage 26, illustrée sur la figure 7, le commutateur 25a relie la sortie du filtre 24a à l'entrée de la cellule à retard 27, tandis que le commutateur 25b relie la sortie du filtre 24b directement au circuit additionneur 28. Dans la deuxième configuration, les connexions sont inversées par le changement de position des commutateurs 25a, 25b.

Les signaux Y$_k$(-n) sortant du circuit additionneur 28 sont envoyés à l'entrée d'une deuxième pile LIFO 29, semblable à la pile 19, qui effectue une nouvelle inversion dans le temps des signaux et restitue, en sortie, des signaux $Y_k(n)$.

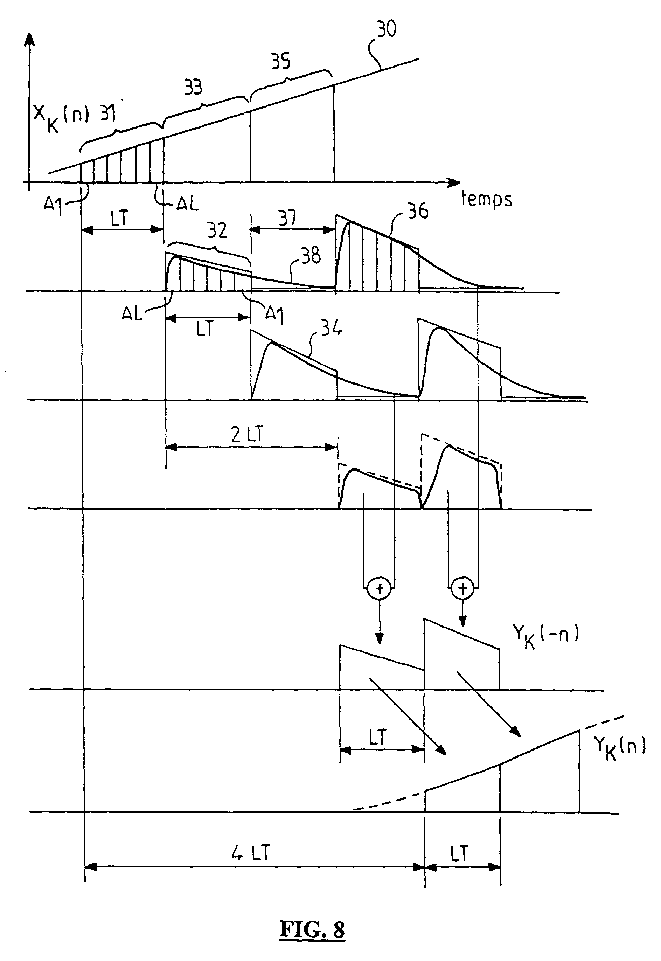

La figure 8 est une succession de diagrammes illustrant schématiquement les traitements des signaux aux différents stades des circuits de la figure 7.

A la première ligne de cette figure 8 on a représenté, pour simplifier, un signal FI 30 dont l'amplitude est croissante linéairement avec le temps. Le signal 30 est divisé en sections 31, 33, 35, ... d'égale durée LT. Les échantillons $A_1 ... A_L$, $B_1 ... B_L$ de ce signal, à la sortie du convertisseur 3 sont désignés dans l'ensemble par $X_k(n)$. Le premier groupe 31 de L échantillons est inversé dans le temps par la pile 19 qui donne, en sortie, sur la voie 22a, le groupe 32 de la deuxième ligne de la figure 8, retardé de LT (L fois la période d'échantillonnage).

A la fin de ce groupe 32, l'aiguillage 20 change de configuration, et le groupe suivant 33 de la première ligne de la figure 8 est envoyé sur la deuxième voie 22b, pour donner le groupe 34 (de la troisième ligne de la figure 8) tandis que, pendant ce temps, la première voie 22a reçoit des signaux zéro. Puis le troisième groupe 35 de la première ligne de la figure 8 est envoyé à nouveau sur la voie 22a pour former le groupe d'échantillons 36 inversés dans le temps, tandis que la voie 22b reçoit des signaux zéro.

Sur la deuxième et la troisième lignes de la figure 8 on a représenté en traits épais l'allure des signaux à la sortie des filtres 24a, 24b. On remarquera, sur la deuxième ligne, que la série de zéros qui fait suite au groupe 32 pendant une durée LT, et qui est représentée par le segment 37, permet au signal de sortie 38 du filtre 24a, qui se maintient en diminuant après le dernier échantillon du groupe 32, d'atteindre une valeur très faible proche de zéro. Le nombre L est choisi de telle sorte que la longueur LT du segment 37 soit suffisante pour que la "traînée" 38 du signal de sortie du filtre 24a ou 24b, après la dernière impulsion d'un groupe tel que 32, soit sensiblement nulle au bout de LT.

La quatrième ligne de la figure 8 illustre le décalage dans le temps créé par la cellule 27 qui retarde de 2 LT les groupes d'échantillons filtrés 32, 34, 35...

La cinquième ligne de la figure 8 illustre l'opération d'addition réalisée dans le circuit 28. La sortie retardée de 2 LT du filtre 24a, correspondant au groupe d'échantillons 32, est additionnée à la traînée du signal de sortie du filtre 24b, faisant suite au groupe d'échantillons 34. D'une manière analogue, la sortie d'un groupe d'échantillons filtrés par le filtre 24b sera additionnée à une traînée du filtre 24a. La cinquième ligne de la figure 8 illustre schématiquement les signaux $Y_k(-n)$ obtenus à la sortie de l'additionneur 28.

La pile LIFO 29 en inversant dans le temps les signaux $Y_k(-n)$ redonne un signal filtré $Y_k(n)$ schématisé à la dernière ligne de la figure 8, chaque groupe étant retardé de LT par la pile 29.

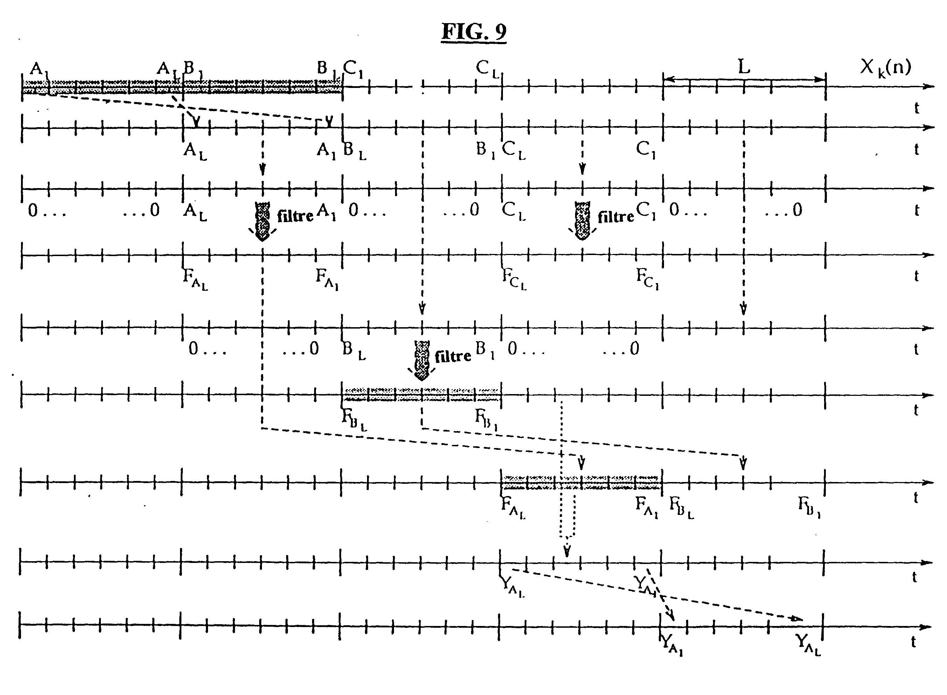

La figure 9 illustre, sous forme de diagrammes, les explications précédentes. On voit que les sections d'échantillons $A_1 ... A_L$ ; $B_1 ... B_L$ ; $C_1... C_L$ sont d'abord inversées dans le temps comme illustré sur la deuxième ligne.

Ensuite, les moyens d'aiguillage 20 envoient sur la ligne 22a les sections inversées $A_L ... A_1, C_L ... C_1$, avec interposition de sections constituées de L zéros, comme illustré sur la troisième ligne de cette figure 9.

La quatrième ligne de la figure 9 correspond aux signaux filtrés $F_{AL} ... F_{A1}$ à la sortie du filtre 24a. La cinquième et la sixième lignes de la figure 9 sont semblables à la troisième et à la quatrième lignes mais pour le cas des sections $B_L ... B_1$, décalées dans le temps de LT par rapport aux sections $A_L...A_1, C_L...C_1$.

La septième ligne de la figure 9 illustre le retard de 2 LT introduit par la cellule 27 sur les signaux filtrés.

La huitième ligne de cette figure 9 illustre schématiquement l'addition réalisée dans le circuit 28 entre une section de signaux filtrés et une "traînée" de la sortie de l'autre filtre lors de la section de zéros envoyés à l'entrée. $Y_{AL}...Y_{A1}$ correspondent aux résultats de l'addition.

La dernière ligne de la figure 9 illustre la nouvelle inversion dans le temps des sections d'échantillons $Y_{AL}... Y_{A1}$, exercée par la pile LIFO 29.

Comme on le voit, la méthode de convolution sectionnée à un seul passage utilise la méthode d'addition-recouvrement (OVERLAP-ADD) prévoyant que la réponse impulsionnelle est au moins de durée finie LT (T = période d'échantillonnage du convertisseur 3), ce qui n'est que seulement approximativement vrai pour des filtres RII. Dans ce cas, le signal de sortie du filtre (inversé dans le temps) est donné par la formule

$$y_k(-n) = h(n) * x_k(-n) + h(n) * x_{k+1}(-n).$$

avec

$$Y_k(n), \ x_k(n) = \begin{cases} y(n), \ x(n) \ \text{pour } kL \leq n \leq (k+1)L, \\ 0 \ \text{ailleurs.} \end{cases}$$

Selon la formule précédente la convolution de temps pour obtenir $y_k(-n)$ peut être interprétée comme deux sections de sortie consistant en une réponse menante ($h(n) * x_k(-n)$) et une réponse de traînée ($h(n) * x_k+1(-n)$).

Ceci correspond à l'architecture décrite à propos de la figure 7 et dont le fonctionnement a été expliqué avec référence aux figures 8 et 9.

Pour la convolution de temps directe du filtre causal 15, de fonction de transfert H(Z), on peut trouver par conséquent :

$$y_k(n) = h(n) * x_k(n) + h(n) * x_{k-1}(n).$$

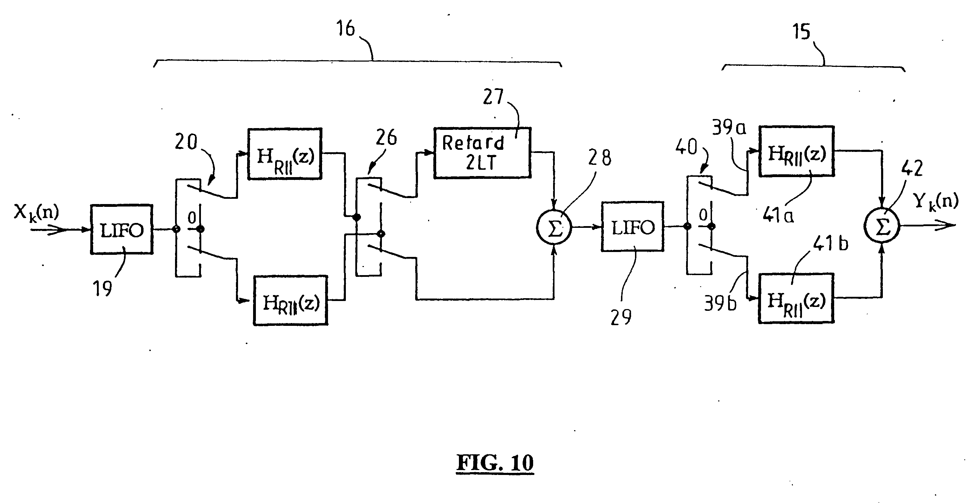

La figure 10 montre l'architecture de filtre complète d'un ensemble de filtrage RII à phase linéaire selon l'invention.

Le filtre non-causal 16, expliqué en détail précédemment, est en cascade avec le filtre causal 15 qui comprend une structure parallèle à deux voies 39a, 39b reliées respectivement à deux commutateurs d'un aiguillage 40 semblable aux aiguillages 20 et 26 et fonctionnant à la même fréquence. L'aiguillage 40 permet de relier alternativement les voies 39a, 39b à la sortie de la pile LIFO 29 et à une source de zéros. Chaque voie 39a, 39b comporte un filtre RII 41a, 41b identique dont la sortie est reliée à une entrée d'un circuit additionneur 42. Le filtre 15 ainsi constitué permet de réaliser la convolution de temps directe correspondant à l'équation précédente.

Si le cycle limite ou si les oscillations de dépassement ne peuvent poser de problèmes, la convolution de temps directe peut même être simplifiée en utilisant un seul filtre RII, par exemple 41a, à la place de la structure parallèle illustrée sur la figure 10.

En prenant en compte les formules qui précèdent, il apparaît que si l'on veut réaliser un filtre de Nyquist avec les deux filtres RII 15 et 16 en cascade, on doit satisfaire à la relation suivante, entre les fonctions de transfert H(Z) pour le filtre 15, et H($Z^{-1}$) pour le filtre 16,

$$H(Z)\ H(Z^{-1}) = H_{nyquist}(Z)$$

Ceci entraîne H(Z) = H$_{demi-nyquist}$(Z).

L'expérience a montré qu'un filtre demi-Nyquist ne peut être entièrement réalisé sur la conception d'un filtre RII et qu'une partie de filtre à réponse impulsionnelle finie RIF doit être ajoutée comme schématisé sur la troisième ligne de la figure 5 avec le filtre 17 et le cas échéant le filtre 18.

Il est apparu que même la partie de filtre RIF domine la partie RII en ce qui concerne l'ordre du filtre.

La fonction de transfert pour le filtre demi-Nyquist de l'invention peut s'exprimer comme suit :

$$H_{demi-nyquist}(Z) = N(Z)/D(Z),$$

formule dans laquelle N(Z) et D(Z) représentent des polynômes de numérateur et de dénominateur de la fonction de transfert du filtre demi-Nyquist. L'ordre minimum des polynômes du numérateur et du dénominateur pourrait s'élever à 10 et 6, respectivement.

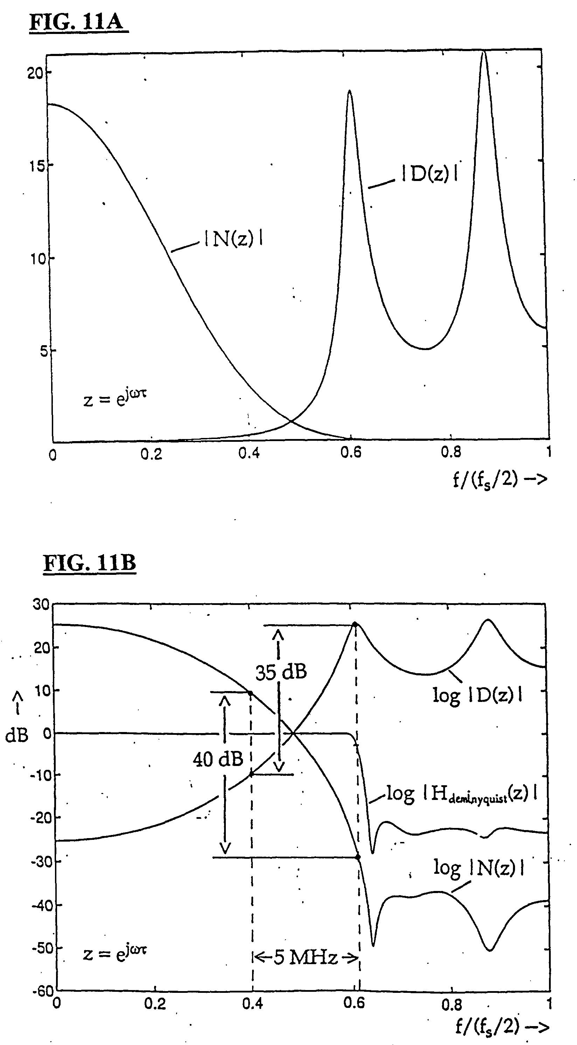

La figure 11A montre les réponses en fréquence résultantes de la partie de filtre RIF et RII. Alors que la partie de filtre RIF qui correspond à la courbe N(Z) montre une caractéristique passe-bas sur toute la région de la bande passante, la courbe D(Z) qui est la réponse de la partie de filtre RII, montre une forte atténuation dans la bande passante du filtre RIF, et quelques fréquences de résonance dans la région de la bande d'arrêt du filtre RIF.

La représentation logarithmique, donnée sur la figure 11B, des réponses en fréquence de la figure 11A permet de voir comment les deux parties de filtre N(Z) et D(Z) peuvent donner un filtre demi-Nyquist. La caractéristique de bande passante plate et l'échelon de transition demi-Nyquist sont principalement dus au comportement antagoniste des deux types de filtre. Les deux types de filtre participent sensiblement également au comportement d'ensemble.

En examinant de plus près les caractéristiques de filtrage RII et RIF, on fait apparaître un problème sérieux associé à la réalisation matérielle de tels types de filtres. Comme montré sur la figure 11B, dans la région de la bande passante sur une largeur de bande d'environ 5 MHz, il existe une variation de gain d'environ 40 dB pour la partie de filtre RIF et d'environ 34 dB pour la partie RII. En tenant compte maintenant également de l'agencement de la figure 5, la plage dynamique du chemin de signal numérique après les deux filtres RII en cascade 15, 16, et avant le filtre RIF 17 suivant, doit être augmentée de 70 dB. On peut en conclure que, premièrement, l'agencement de filtre proposé sur la figure 5 n'est qu'un schéma simplifié et que, deuxièmement, les polynômes N(Z) et D(Z) de filtrage doivent être décomposés en cellules de filtrage plus petites.

Des essais avec simulation sur ordinateur ont montré que l'on obtient des résultats satisfaisants avec:

pour le filtre RIF:

$$N(Z) = N_1(Z) \, N_2(Z) \, N_3(Z) \, N_4(Z) \, N_5(Z)$$

et pour le filtre RII:

$$D(Z) = D_1(Z) \, D_2(Z) \, D_3(Z).$$

La décomposition dès polynômes $N(Z)$, $D(Z)$ en polynômes d'ordre inférieur permet d'obtenir des résultats satisfaisants.

En outre, pour les filtres RIF une représentation en partie de filtre causale et partie non-causale n'a plus de sens - du fait qu'elle exige deux fois le nombre de coefficients à réaliser - de sorte que la caractéristique de filtrage RIF résultante de la partie de filtre causale et non-causale peut être décrite par

$$N(Z) \, N(Z^{-1}) = N^*_1(Z) \, N^*_2(Z) \, N^*_3(Z) \, N^*_4(Z) \, N^*_5(Z)$$

avec:

$N^*_1(Z) = N_1(Z) \, N_1(Z^{-1})$, $N^*_2(Z) = N_2(Z) \, N_2(Z^{-1})$,
$N^*_3(Z) = N_3(Z) \, N_3(Z^{-1})$, $N^*_4(Z) = N_4(Z) \, N_4(Z^{-1})$,
$N^*_5(Z) = N_5(Z) \, N_5(Z^{-1})$,
où chaque $N^*_i(Z)$ est d'ordre quatre et a des coefficients de la forme
$( \beta^{(i)}_2, \beta^{(i)}_1, \beta^{(i)}_0, \beta^{(i)}_1, \beta^{(i)}_2 )$.

Par contre, chaque $D_i(Z)$ est d'ordre deux et est décrit par les coefficients
$(\alpha^{(i)}_0, \alpha^{(i)}_1, \alpha^{(i)}_2)$.

Les coefficients des cellules de filtrage RIF sont donnés ci-après:

$$\beta^{(1)}_k = [377, 638, 1024, 638, 377]$$

$$\beta^{(2)}_k = [94, 349, 512, 349, 94]$$

$$\beta^{(3)}_k = [71, 177, 256, 177, 71]$$

$$\beta^{(4)}_k = [34, 159, 256, 159, 34]$$

$$\beta^{(5)}_k = [19, -155, 512, -155, 19].$$

Le facteur d'amplification correspondant pour le filtre RIF est $V_N = 12$.

Avec ces valeurs il apparaît que la fonction de transfert $N_1(Z)$ pour la première cellule de filtrage RIF s'exprime de la manière suivante :

$$N_1(Z) = 377 \, Z^2 + 638 \, Z + 1024 + 638 \, Z^{-1} + 377 \, Z^{-2}.$$

On pourrait écrire de la même manière les autres polynômes $N_2(Z) \ldots N_5(Z)$ à l'aide des valeurs des coefficients donnés dans le tableau qui précède.

Les coefficients des trois cellules de filtrage RII sont donnés par le tableau suivant

$$\alpha^{(1)}_k = [76, 128, 63]$$

$$\alpha^{(2)}_k = [128, 82, 114]$$

$$\alpha^{(3)}_k = [128, 62, 66].$$

Le facteur d'amplification correspondant $V_D$ du filtre RII est $V_D = 2348/4096$.

D'après les coefficients donnés dans ce tableau, le premier polynôme de la décomposition $D_1(Z)$ s'écrit:

$$D_1(Z) = 76\ Z + 128 + 63\ Z^{-1}.$$

Les autres polynômes s'obtiennent de la même manière, à l'aide des lignes suivantes .

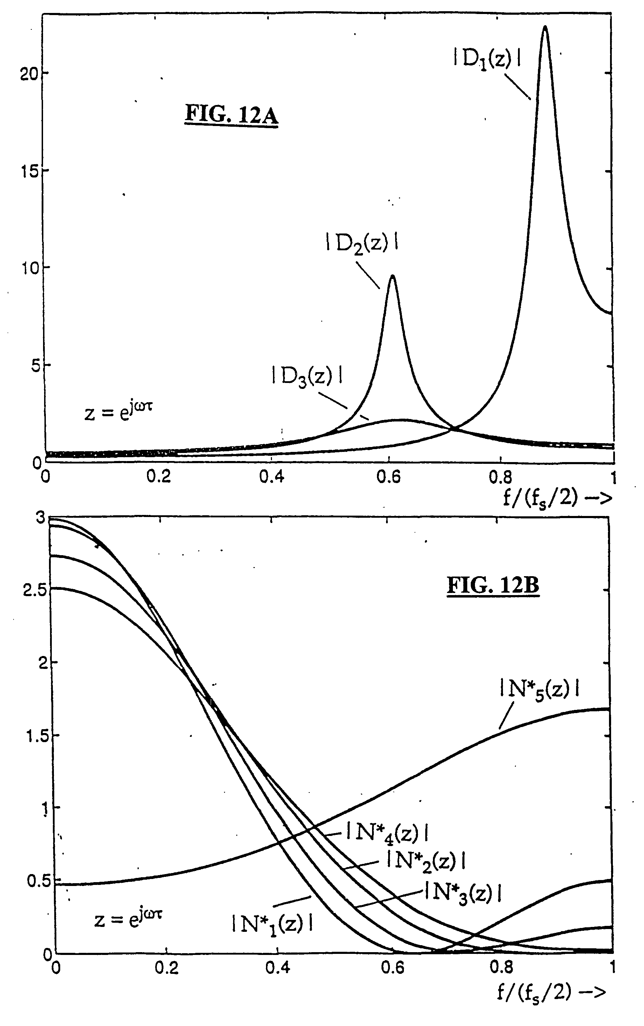

La figure 12A montre les réponses en fréquence des différentes cellules de dénominateur $D_i(Z)$, tandis que la figure 12B montre les réponses en fréquence des cellules de numérateur $N^*_i(Z)$ (fréquence en abscisses, amplitude en ordonnées).

Afin d'éviter une augmentation inacceptable de la plage dynamique dans le chemin de signal numérique, les fréquences de résonance de chaque cellule de dénominateur $D_i(Z)$ doivent être compensées par une cellule de numérateur précédente $N^*_i(Z)$. Une simulation sur ordinateur a permis de montrer que les combinaisons suivantes donnaient l'augmentation minimale de la plage dynamique :

$$N^*_4(Z)\ D_1(Z),\ N^*_3(Z)\ D_2(Z),\ N^*_2(Z)\ D_3(Z).$$

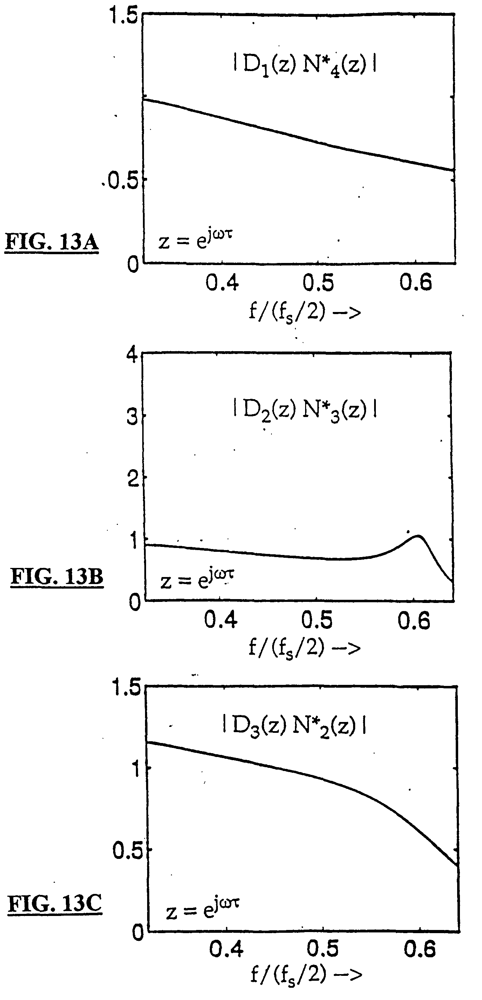

Les figures 13A, 13B et 13C montrent les réponses en fréquence de ces combinaisons dans la région de fréquences intéressante du signal FI. Le gain est porté en ordonnée et la fréquence en abscisse est exprimée par le rapport de la fréquence à la moitié de la fréquence d'échantillonnage (rapport $f/(f_s/2)$). La variation de gain résultante dans chacune de ces trois combinaisons n'excède pas un facteur 2, c'est-à-dire 6 dB.

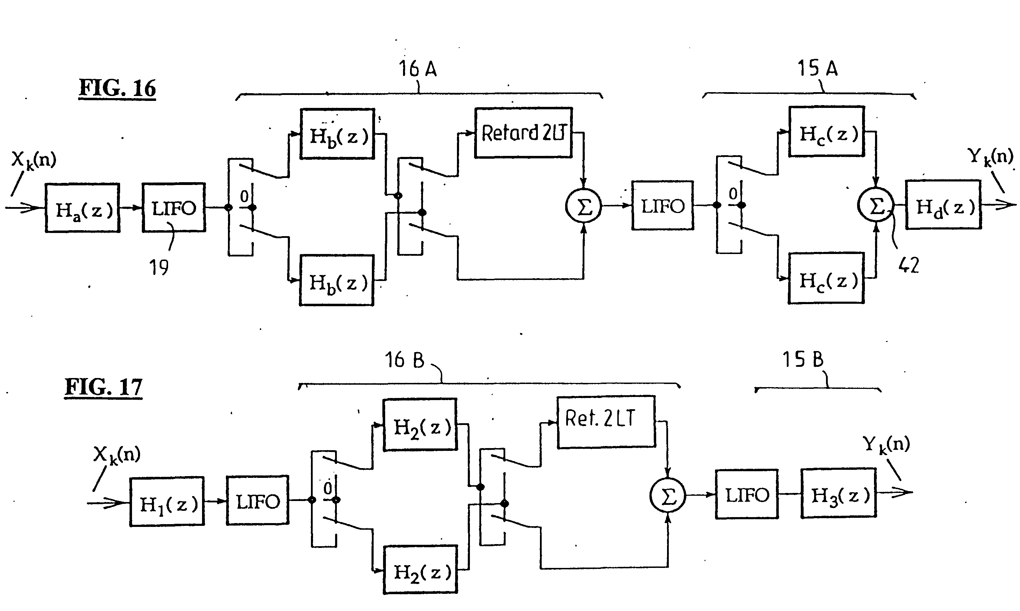

L'architecture de filtre de Nyquist proposée est maintenant illustrée sur la figure 16 où l'on retrouve en cascade des filtres RII 15A et 16A d'architecture semblable à celle des filtres 15 et 16 déjà rencontrés. La cellule de filtrage dans chaque voie de la partie 16A est désignée par $H_b(Z)$ tandis que dans la partie 15A la cellule de filtrage est désignée par $H_c(Z)$.

Une cellule de filtrage RIF désignée par $H_a(Z)$ est prévue en amont de la pile LIFO 19 tandis qu'une autre cellule de filtrage RIF désignée par $H_d(Z)$ est prévue en aval du circuit additionneur 42.

Les cellules de filtrage, qui constituent des sous-filtres, ont les fonctions de transfert suivantes :

$$H_a(Z) = N^*_4(Z)$$

$$H_b(Z) = D_1\ (Z)\ N^*_3(Z)\ D_2(Z)\ N^*_2(Z)\ D_3(Z)$$

$$H_c(Z) = D_1(Z)\ D_2(Z)\ D_3(Z)$$

$$H_d(Z) = N^*_1(Z)\ N^*_5(Z).$$

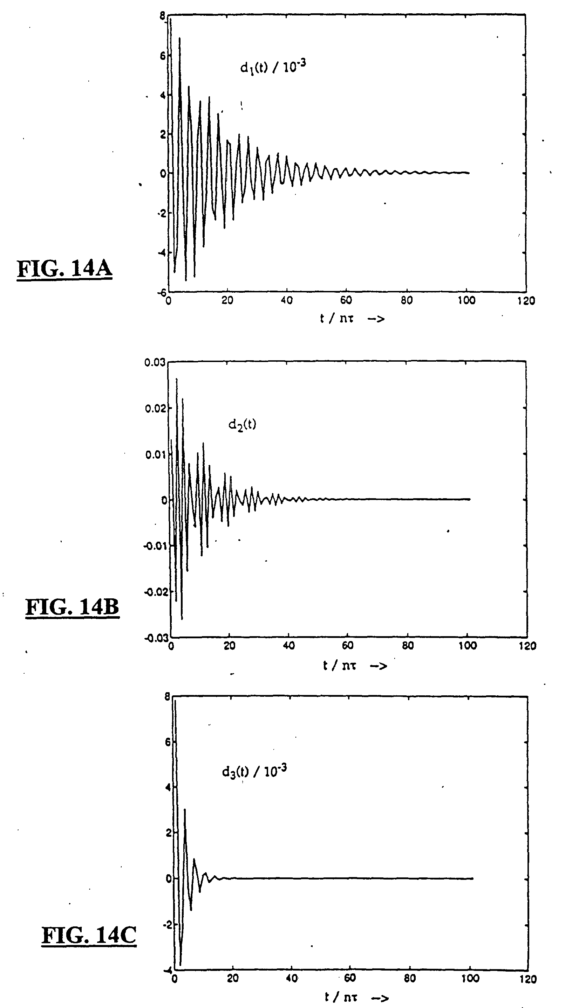

Le nombre L, déjà évoqué précédemment, qui définit la longueur de la section de signal échantillonné peut avoir une influence importante sur la complexité du matériel ainsi que sur son efficacité. Afin d'obtenir une première estimation de la longueur de section maximale nécessitée, les réponses impulsionnelles du filtre avec la caractéristique de fréquence de $D_1(Z)$, $D_2(Z)$ et $D_3(Z)$ ont été observées. Les figures 14A, 14B et 14C montrent les réponses impulsionnelles correspondantes.

Les réponses $d_1(t)$ et $d_2(t)$ des figures 14A et 14B montrent tout à fait bien leur caractère oscillant en raison des fréquences de résonance dans les réponses en fréquence tandis que $d_3(t)$ sur la figure 14C, correspondant à la

cellule $D_3(Z)$, diminue très rapidement.

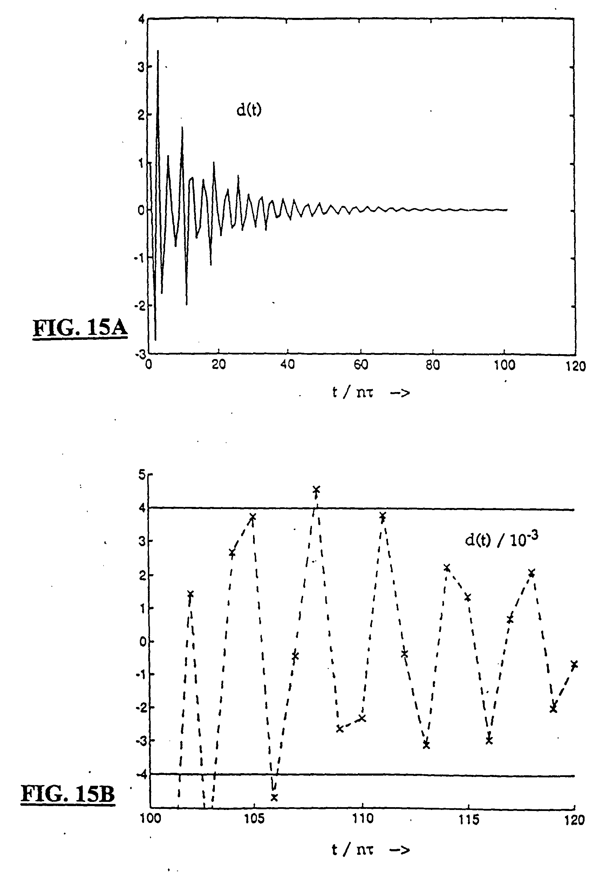

D'après ces résultats, il n'est pas surprenant que la réponse impulsionnelle globale de ces trois filtres est gouvernée par $d_1(t)$. La figure 15A donne le résultat de convolution de ces trois filtres avec

$$d(t) = d_1(t) * d_2(t) * d_3(t).$$

Si une résolution dynamique de 10 bits du signal de sortie numérique doit être prise en compte, la longueur L de section nécessaire est obtenue lorsque l'amplitude de la réponse impulsionnelle tombe au-dessous de 1/1000 de l'amplitude en réponse impulsionnelle maximale. La figure 15B représente, avec agrandissement d'un facteur 1000 des valeurs en ordonnée, la réponse impulsionnelle $d(t)$ pour des temps exprimés, en abscisse, par un multiple de la période d'échantillonnage. D'après la figure 15B il apparaît que la longueur de section minimale L pour obtenir le résultat souhaité est d'environ 110 fois la période d'échantillonnage T.

Cette valeur peut être prise beaucoup plus faible dans la pratique car le signal d'entrée du filtre de Nyquist ne sera jamais une impulsion delta et les composantes de fréquences potentielles qui donnent lieu aux oscillations dans les diagrammes $d_1(t)$ et $d_2(t)$ des figures 14A et 14B seront sensiblement atténuées par la caractéristique de filtre passe-bas précédente de $N^*_4(Z)$ et $N^*_3(Z)$. Un bref calcul permettra de vérifier l'argument final.

Les maxima de $|D_1(Z)|$ (valeur absolue de $D_1(Z)$) et $|D_2(Z)|$ peuvent être déduits de la figure 12A. Ils s'élèvent à environ 22 pour le maximum de la valeur absolue de $D_1(Z)$ et à environ 10 pour le maximum de la valeur absolue de $D_2(Z)$. Par application de $N^*_4(Z)$ et $N^{*3}(Z)$ avant $D_1(Z)$ et $D_2(Z)$, les maxima seront presque compensés. Un nombre L donnant une longueur de section raisonnable peut être de l'ordre de 50.

Une architecture de filtre beaucoup plus simple peut être réalisée si la méthode d'addition-recouvrement pour le ou les filtres causals RII n'est pas nécessaire. Dans ce cas, l'architecture de filtre de Nyquist est donnée par la figure 17. L'architecture du filtre non-causal 16B reste la même, mais le filtre causal RII 15B est simplifié et ne comporte plus deux voies parallèles avec un circuit additionneur, mais simplement une cellule de filtrage désignée par sa fonction de transfert $H_3(Z)$. Les autres cellules de filtrage sont également désignées par leur fonction de transfert $H_1(Z)$ pour la cellule en amont de la pile LIFO 19 et $H_2(Z)$ pour les cellules du filtre non-causal 16B. Les fonctions de transfert des filtres sont données par les équations suivantes:

$$H_1(Z) = N^*_4(Z)\, D_1(Z)\, N^*_3(Z)\, D_2(Z)\, N^*_2(Z)\, D_3(Z)$$

$$H_2(Z) = D_1(Z)\, D_2(Z)\, D_3(Z)$$

$$H_3(Z) = N^*_1(Z)\, N^*_5(Z).$$

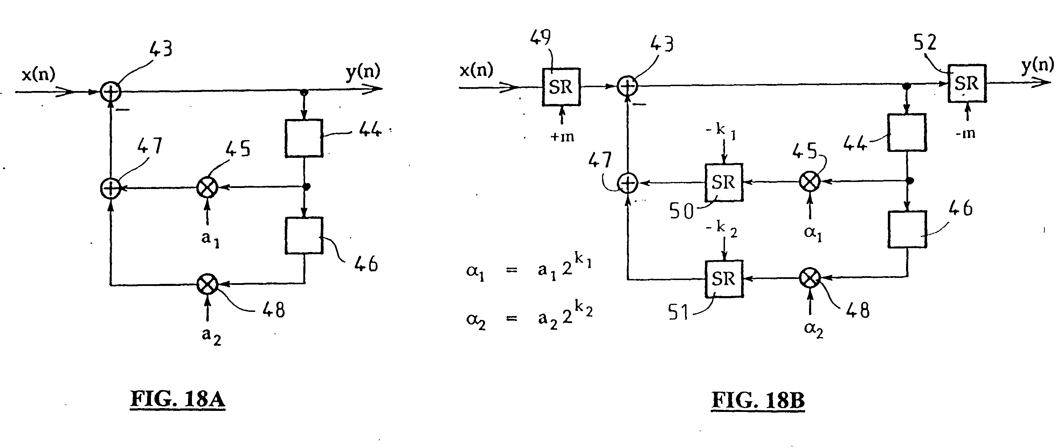

Les figures 18A et 18B sont des schémas de réalisation de cellules de filtrage RII.

Le schéma de la figure 18A correspond à une cellule de filtrage RII du second ordre. Le signal d'entrée $x(n)$ arrive sur une entrée d'un circuit soustracteur 43. Le signal de sortie du circuit 43 est renvoyé sur une entrée de ce circuit par l'intermédiaire d'une première cellule à retard 44 qui introduit un retard $\Delta t$. La sortie de cette cellule est envoyée d'une part sur une entrée d'un circuit multiplicateur 45 et d'autre part sur l'entrée d'une autre cellule à retard 46 semblable à la cellule 44. Un coefficient de multiplication $a_1$ est envoyé sur une autre entrée du circuit multiplicateur 45 dont la sortie est envoyée sur une entrée d'un circuit additionneur 47.

La sortie de la cellule à retard 46 est envoyée sur une entrée d'un circuit multiplicateur 48 dont une autre entrée reçoit le coefficient de multiplication $a_2$. La sortie du circuit multiplicateur 48 est envoyée sur une autre entrée du circuit additionneur 47. La sortie du circuit 47 est reliée à une entrée du circuit soustracteur 43.

L'équation non quantifiée entre le signal d'entrée $x(n)$ et le signal de sortie $y(n)$ est donnée par:

$$y(n) = x(n) - a_1 y(n-1) - a_2 y(n-2).$$

La figure 18B est un schéma d'une cellule de filtrage RII de second ordre, du même type que celle de la figure 18A, mais adaptée pour un traitement de signal numérique avec une amplification par un facteur $2^m$ du signal d'entrée $x(n)$. On retrouve les différents circuits décrits à propos de la figure 18A et désignés par les mêmes références numériques.

En outre, le circuit soustracteur 43 est précédé d'un circuit 49 permettant d'amplifier de $2^m$ le signal $x(n)$ de sorte que le signal entrant sur le circuit 43 est égal à $2^m x(n)$. Les coefficients multiplicateurs envoyés sur les circuits 45 et 48 sont respectivement $\alpha_1$ et $\alpha_2$ avec :

$$\alpha_1 = a_1\, 2^k{}_1 \text{ et } \alpha_2 = a_2\, 2^k{}_2.$$

Entre la sortie du circuit 45 et l'entrée du circuit 47 est prévu un circuit 50 recevant sur une entrée la valeur $-k_1$ ; ce circuit 50 donne en sortie un signal égal au produit du signal d'entrée par $2^{-k1}$.

Un circuit 51, analogue au circuit 50, est prévu entre la sortie du multiplicateur 48 et l'entrée de l'additionneur 47, ce circuit 51 recevant la valeur $-k_2$ et multipliant le signal d'entrée par $2^{-k2}$.

Enfin, un circuit 52 est prévu juste en aval de la sortie de la cellule de filtrage. Ce circuit 52, semblable aux circuits 49, 50 et 51 reçoit une valeur $-m$ et donne en sortie le produit du signal d'entrée par $2^{-m}$.

La cellule de filtrage de la figure 18B permet d'obtenir un signal de sortie sous. forme quantifiée de bonne qualité.

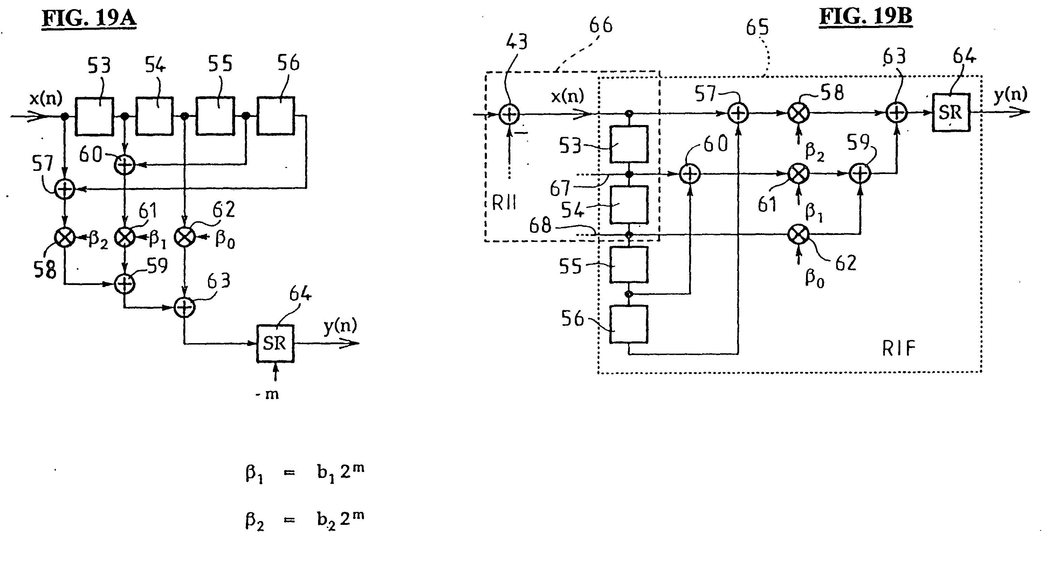

La figure 19A est un schéma d'une cellule de filtrage RIF du quatrième ordre. Le signal d'entrée $x(n)$ est envoyé sur l'entrée d'une cellule à retard 53 qui est suivie en série par trois autres cellules 54, 55, 56 introduisant chacune un retard $\Delta t$.

Le signal d'entrée $x(n)$ est également envoyé sur une entrée d'un circuit additionneur 57 dont une autre entrée reçoit la sortie de la cellule 56. La sortie du circuit 57 est envoyée sur une entrée d'un circuit multiplicateur 58 dont une autre entrée reçoit un coefficient $\beta_2$ de multiplication. La sortie du circuit multiplicateur 58 est envoyée sur une entrée d'un circuit additionneur 59.

La sortie de la cellule à retard 53 est envoyée sur une entrée d'un circuit additionneur 60 dont une autre entrée reçoit la sortie de la cellule 55. La sortie du circuit 60 est envoyée sur une entrée d'un circuit multiplicateur 61 dont une autre entrée reçoit un coefficient $\beta_1$. La sortie du circuit 61 est envoyée sur une autre entrée du circuit additionneur 59.

La sortie de la cellule à retard 54 est envoyée sur une entrée d'un circuit multiplicateur 62 dont une autre entrée reçoit un coefficient $\beta_0$. La sortie du circuit 62 est envoyée sur une entrée d'un circuit additionneur 63 dont une autre entrée reçoit la sortie du circuit additionneur 59. La sortie du circuit 63 est envoyée sur un circuit 64 qui reçoit sur une autre entrée l'exposant $-m$ ; le circuit 64 multiplie le signal sortant du circuit 63 par $2^{-m}$. Le circuit 64 délivre le signal de sortie $y(n)$.

Les coefficients $\beta_0$, $\beta_1$ et $\beta_2$ sont égaux au produit de $2^m$ par les coefficients souhaités pour la cellule de filtrage RIF.

La figure 19B est un schéma de la combinaison d'une cellule de filtrage RIF 65 semblable à celle de la figure 19A, avec une cellule de filtrage RII 66 semblable à celle de la figure 18B.

La cellule RIF 65 se compose du même circuit que la cellule de la figure 19A. Toutefois, la sortie du circuit 58 est reliée directement à une entrée du circuit 63, alors que la sortie du circuit 62 est reliée à une entrée du circuit 59.

La cellule RII comprend le circuit soustracteur 43 situé avant l'entrée de la cellule 65. Les signaux prélevés à la sortie des cellules à retard 53, 54, par des lignes 67, 68 sont renvoyés à une entrée du circuit soustracteur 43 comme montré schématiquement sur la figure 18B.

L'invention permet de réaliser un filtrage de Nyquist de signaux FI vidéo numériques dans des conditions économiques. La combinaison de cellules de filtrage RIF et RII conduit à une réduction importante des coefficients de filtre qui doivent être effectivement réalisés. Comparée à une conception de filtre RIF direct pour laquelle il faudrait réaliser environ 50 coefficients, en exploitant la symétrie du filtre, pour l'exemple considéré la solution proposée ne nécessite que 22 coefficients.

**Revendications**

1. Circuit pour un filtrage numérique de signaux vidéo à fréquence intermédiaire FI comprenant un convertisseur A/D (analogique/numérique) (3), un filtre numérique Nyquist placé en aval du convertisseur A/D (3) et un préfiltre analogique (2) , propre à sélectionner le canal souhaité, placé en amont du convertisseur A/D (3);

   - le filtre de Nyquist (N) étant caractérisé en ce qu'il est composé de deux filtres RII ( 15,16; 15A,16A; 15B,16B ) placés en cascade pour réaliser un filtre RII combiné, l'un ( 16; 16A; 16B ) de ces filtres RII étant réalisé sous forme non-causale et l'autre étant réalisé sous forme causale ( 15; 15A; 15B ), et d'un filtre RIF (17), en série, pour corriger les filtres RII.

2. Circuit selon la revendication 1 caractérisé par le fait que chacun des deux filtres RII (15,16; 15A,16A; 15B,16B) est un filtre demi-Nyquist.

3. Circuit selon la revendication 1 ou 2 caractérisé par le fait que les filtres RII et RIF sont combinés de manière à réduire la dynamique de signal, et à utiliser partout la même dynamique.

4. Circuit selon l'une des revendications 1 à 3 caractérisé par le fait que le filtre RII (16; 16A; 16B) réalisé de manière non-causale est le conjugué complexe du filtre RII causal (15; 15A; 15B) de sorte qu'après traitement par les deux filtres RII le signal vidéo reste sensiblement à phase linéaire.

5. Circuit selon l'une des revendications 1 à 4 caractérisé par le fait que le filtre RII (16; 16A; 16B) réalisé de manière non-causale comprend des moyens d'échantillonnage (3) du signal vidéo, des moyens (20) pour découper le signal vidéo échantilloné en sections de longueur de temps prédéterminée (LT), des moyens d'inversion dans le temps (19) des échantillons des sections découpées avant filtrage, et des seconds moyens d'inversion dans le temps (29) après filtrage.

6. Circuit selon la revendication 5 caractérisé par le fait que chaque moyen d'inversion dans le temps des échantillons avant et après filtrage est constitué par une pile LIFO (19, 29).

7. Circuit selon la revendication 6 caractérisé par le fait que le filtre non-causal (16; 16A; 16B) comporte deux voies (22a, 22b) branchées en parallèle à la sortie d'une première pile LIFO (19), chaque voie comportant un filtre numérique RII identique (24a, 24b) , , un moyen d'aiguillage (20) fonctionnant à un rythme d'horloge(LT) égal à L fois la période d'échantillonnage (T) étant prévu pour relier alternativement un filtre (24a, 24b) à la sortie de la pile LIFO (19) sur l'une des deux voies (22a, 22b) et pour relier l'autre filtre (24b, 24a) sur l'autre voie à une émission (23) de zéros de même durée que la section découpée, un deuxième moyen d'aiguillage (26) fonctionnant au même rythme d'horloge que le premier (20) étant prévu en aval des deux filtres parallèles (24a, 24b) pour relier alternativement la sortie du filtre (24a, 24b) qui reçoit les échantillons de la section découpée renversés dans le temps à une cellule à retard (27) introduisant un retard (2LT) égal à deux fois la durée d'une section, la sortie de cette cellule à retard (27) étant reliée à une entrée d'un additionneur (28) dont une autre entrée est reliée , par le deuxième moyen d'aiguillage (26), à la sortie du filtre (24b, 24a) qui reçoit la série de zéros, la sortie de l'additionneur (28) étant reliée à la deuxième pile LIFO (29) qui rétablit l'ordre dans le temps des échantillons filtrés.

8. Circuit selon la revendication 7 caractérisé par le fait que le nombre L est choisi de telle sorte que la durée (LT), égale au produit de L par la période d'échantillonnage, soit suffisante pour que la traînée du signal filtré à la fin du passage de la séquence de zéros soit négligeable.

9. Circuit selon l'une des revendications précédentes caractérisé par le fait que le filtre RIF et le filtre combiné RII sont décomposés en de petites cellules de filtrage de telle sorte que le polynôme de la fonction de transfert globale pour chaque filtre soit égal au produit de plusieurs polynômes d'ordre plus petit, la fonction de transfert globale étant formée par une fraction, le filtre RIF correspondant au polynôme ($N(Z)$) du numérateur, le fitre combiné RII correspondant au polynôme ($D(Z)$) du dénominateur de la fraction.

10. Circuit selon la revendication 9 caractérisé par le fait que le filtre RIF est décomposé en cinq cellules ayant chacune une fonction de transfert $N_1(Z)$, $N_2(Z)$ $N_3(Z)$, $N_4(Z)$, $N_5(Z)$, d'ordre 4 ,au numérateur, tandis que le filtre RII , dont la fonction de transfert $D(Z)$ est en dénominateur, est décomposé en trois cellules de fonction de transfert $D_1(Z)$, $D_2(Z)$, $D_3(Z)$, d'ordre 2.

11. Circuit selon la revendication 10 caractérisé par le fait que le filtre RIF résultant a une caractéristique décrite par la relation:

$$N(Z) \, N(Z^{-1}) = N^*_1(Z) \, N^*_2(Z) \, N^*_3(Z) \, N^*_4(Z) \, N^*_5(Z)$$

avec:

$N^*_1(Z) = N_1(Z) \, N_1(Z^{-1})$  $N^*_2(Z) = N_2(Z) \, N_2(Z^{-1})$,
$N^*_3(Z) = N_3(Z) \, N_3(Z^{-1})$,  $N^*_4(Z) = N_4(Z) \, N_4(Z^{-1})$,
$N^*_5(Z) = N_5(Z) \, N_5(Z^{-1})$

**12.** Circuit selon la revendication 10 ou 11 caractérisé par le fait que les coefficients des cellules de filtre RIF sont les suivants:

$$\beta^{(1)}{}_k = [377, 638, 1024, 638, 377]$$

$$\beta^{(2)}{}_k = [94, 349, 512, 349, 94]$$

$$\beta^{(3)}{}_k = [71, 177, 256, 177, 71]$$

$$\beta^{(4)}{}_k = [34, 159, 256, 159, 34]$$

$$\beta^{(5)}{}_k = [19, -155, 512, -155, 19]$$

tandis que les coefficients du RII sont les suivants:

$$\alpha^{(1)}{}_k = [76, 128, 63]$$

$$\alpha^{(2)}{}_k = [128, 82, 114]$$

$$\alpha^{(3)}{}_k = [128, 62, 66].$$

**13.** Circuit selon la revendication il ou 12 caractérisé par le fait qu'il se compose de sous-filtres (Fig.16) dont les fonctions de transfert sont les suivantes:

$$H_a(Z) = N^*{}_4(Z)$$

$$H_b(Z) = D_1(Z)\, N^*{}_3(Z)\, D_2(Z)\, N^*{}_2(Z)\, D_3(Z)$$

$$H_c(Z) = D_1(Z)\, D_2(Z)\, D_3(Z)$$

$$H_d(Z) = N^*{}_1(Z)\, N^*{}_5(Z).$$

**14.** Circuit selon la revendication 11 ou 12 caractérisé par le fait qu'il se compose de sous-filtres (Fig.17) dont les fonctions de transfert sont les suivantes:

$$H_1(Z) = N^*{}_4(Z)\, D_1(Z)\, N^*{}_3(Z)\, D_2(Z)\, N^*{}_2(Z)\, D_3(Z)$$

$$H_2(Z) = D_1(Z)\, D_2(Z)\, D_3(Z)$$

$$H_3(Z) = N^*{}_1(Z)\, N^*{}_5(Z).$$

**15.** Circuit selon l'une des revendications précédentes caractérisé par le fait que la fréquence d'échantillonnage ($f_s$) est égale, ou sensiblement égale, à:

$$( 4 f_{FImax} - 2 B_{CH})/ 3$$

avec $f_{FImax}$ égale à la fréquence FI maximale, et $B_{CH}$ égal à la largeur de bande finale.

**16.** Circuit selon la revendication 15 caractérisé par le fait que la fréquence d'échantillonnage ($f_S$) est égale, ou sensiblement égale, à 48.87Mhz.

**Claims**

**1.** Circuit for the digital filtering of IF intermediate frequency video signals comprising an A/D (analog/digital) converter (3), a Nyquist digital filter placed downstream of the A/D converter (3) and an analog prefilter (2), suitable for selecting the desired channel, placed upstream of the A/D converter (3);

- the Nyquist filter (N) being characterized in that it is composed of two IIR filters (15, 16; 15A, 16A; 15B, 16B) placed in cascade to produce a combined IIR filter, one (16; 16A; 16B) of these IIR filters being produced in non-causal form and the other being produced in causal form (15; 15A; 15B), and of an FIR filter (17), in series, for correcting the IIR filters.

**2.** Circuit according to Claim 1, characterized in that each of the two IIR filters (15, 16; 15A, 16A; 15B, 16B) is a semi-Nyquist filter.

**3.** Circuit according to Claim 1 or 2, characterized in that the IIR and FIR filters are combined in such a way as to reduce the signal dynamic swing and to use the same dynamic swing everywhere.

**4.** Circuit according to one of Claims 1 to 3, characterized in that the IIR filter (16; 16A; 16B) produced in a non-causal manner is the complex conjugate of the causal IIR filter (15; 15A; 15B) so that after processing by the two IIR filters the video signal remains substantially linear in phase.

**5.** Circuit according to one of Claims 1 to 4, characterized in that the IIR filter (16; 16A; 16B) produced in a non-causal manner comprises video signal sampling means (3), means (20) for chopping the sampled video signal into sections of predetermined length of time (LT), means (19) of time inversion of the samples of the chopped sections before filtering, and second means (29) of time inversion after filtering.

**6.** Circuit according to Claim 5, characterized in that each means of time inversion of the samples before and after filtering consists of an LIFO stack (19, 29).

**7.** Circuit according to Claim 6, characterized in that the non-causal filter (16; 16A; 16B) includes two pathways (22a, 22b) shunted to the output of a first LIFO stack (19), each pathway including an identical IIR digital filter (24a, 24b), a router means (20) operating at a clock rate (LT) equal to L times the sampling period (T) being provided for alternately linking a filter (24a, 24b) to the output of the LIFO stack (19) on one of the two pathways (22a, 22b) and for linking the other filter (24b, 24a) on the other pathway to a transmission (23) of zeros of the same duration as the chopped section, a second router means (26) operating at the same clock rate as the first (20) being provided downstream of the two parallel filters (24a, 24b) for alternately linking the output of the filter (24a, 24b) which receives the time reversed samples of the chopped section to a delay cell (27) introducing a delay (2LT) equal to twice the duration of a section, the output of this delay cell (27) being linked to an input of an adder (28) another input of which is linked, via the second router means (26), to the output of the filter (24b, 24a) which receives the series of zeros, the output of the adder (28) being linked to the second LIFO stack (29) which re-establishes the time order of the filtered samples.

**8.** Circuit according to Claim 7, characterized in that the number L is chosen such that the duration (LT), equal to the product of L times the sampling period, is sufficient for the trail of the filtered signal at the end of the passing of the sequence of zeros to be negligible.

**9.** Circuit according to one of the preceding claims, characterized in that the FIR filter and the IIR combined filter are split up into small filtering cells in such a way that the polynomial of the overall transfer function for each filter is equal to the product of several polynomials of lower order, the overall transfer function being formed by a fraction, the FIR filter corresponding to the polynomial (N(Z)) of the numerator, the IIR combined filter corresponding to the polynomial (D(Z)) of the denominator of the fraction.

10. Circuit according to Claim 9, characterized in that the FIR filter is split up into five cells each having a transfer function $N_1(Z)$, $N_2(Z)$, $N_3(Z)$, $N_4(Z)$, $N_5(Z)$, of order 4, in the numerator, whilst the IIR filter, whose transfer function D(Z) is in the denominator, is split up into three cells with transfer function $D_1(Z)$, $D_2(Z)$, $D_3(Z)$, of order 2.

11. Circuit according to Claim 10, characterized in that the resulting FIR filter has a characteristic described by the relation:

$$N(Z) \, N(Z^{-1}) = N^*_1(Z) \, N^*_2(Z) \, N^*_3(Z) \, N^*_4(Z) \, N^*_5(Z)$$

with:

$$N^*_1(Z) = N_1(Z) \, N_1(Z^{-1}), \, N^*_2(Z) = N_2(Z) \, N_2(Z^{-1}),$$
$$N^*_3(Z) = N_3(Z) \, N_3(Z^{-1}), \, N^*_4(Z) = N_4(Z) \, N_4(Z^{-1}),$$
$$N^*_5(Z) = N_5(Z) \, N_5(Z^{-1})$$

12. Circuit according to Claim 10 or 11, characterized in that the coefficients of the FIR filter cells are as follows:

$$\beta^{(1)}_k = [377, 638, 1024, 638, 377]$$

$$\beta^{(2)}_k = [94, 349, 512, 349, 94]$$

$$\beta^{(3)}_k = [71, 177, 256, 177, 71]$$

$$\beta^{(4)}_k = [34, 159, 256, 159, 34]$$

$$\beta^{(5)}_k = [19, -155, 512, -155, 19]$$

whilst the coefficients of the IIR are as follows:

$$a^{(1)}_k = [76, 128, 63]$$

$$\alpha^{(2)}_k = [128, 82, 114]$$

$$\alpha^{(3)}_k = [128, 62, 66] \, .$$

13. Circuit according to Claim 11 or 12, characterized in that it is composed of sub-filters (Fig. 16) whose transfer functions are as follows:

$$H_a(Z) = N^*_4(Z)$$

$$H_b(Z) = D_1(Z) \, N^*_3(Z) \, D_2(Z) \, N^*_2(Z) \, D_3(Z)$$

$$H_c(Z) = D_1(Z) \, D_2(Z) \, D_3(Z)$$

$$H_d(Z) = N^*_1(Z)\, N^*_5(Z).$$

14. Circuit according to Claim 11 or 12, characterized in that it is composed of sub-filters (Fig. 17) whose transfer functions are as follows:

$$H_1(Z) = N^*_4(Z)\, D_1(Z)\, N^*_3(Z)\, D_2(Z)\, N^*_2(Z)\, D_3(Z)$$

$$H_2(Z) = D_1(Z)\, D_2(Z)\, D_3(Z)$$

$$H_3(Z) = N^*_1(Z)\, N^*_5(Z).$$

15. Circuit according to one of the preceding claims, characterized in that the sampling frequency ($f_S$) is equal, or substantially equal, to:

$$(4\, f_{IFmax} - 2\, B_{CH})/3$$

with $f_{IFmax}$ equal to the maximum IF frequency, and $B_{CH}$ equal to the final bandwidth.

16. Circuit according to Claim 15, characterized in that the sampling frequency ($f_s$) is equal, or substantially equal, to 48.87 MHz.


**Patentansprüche**

1. Schaltung zur digitalen Filterung von Videosignalen bei der Zwischenfrequenz ZF mit einem A/D (Analog/Digital)-Konverter (3), einem digitalen Nyquistfilter hinter dem A/D-Konverter (3) und einem analogen Vorfilter (2) vor dem A/D-Konverter (3) zur Auswahl des gewünschten Kanals, dadurch gekennzeichnet, daß das Nyquistfilter (N) zur Bildung eines kombinierten RII-Filters aus zwei in Kaskade angeordneten RII-Filtern (15, 16; 15A, 16A; 15B, 16B), wobei eines (16; 16A; 16B) dieser RII-Filter in einer nicht-kausalen Form und das andere in einer kausalen Form (15; 15A; 15B) ausgebildet ist, und aus einem in Reihe liegenden RIF-Filter (17) besteht, um die RII-Filter zu korrigieren.

2. Schaltung nach Anspruch 1, dadurch gekennzeichnet, daß jedes der beiden RII-Filter (15, 16; 15A, 16A; 15B, 16B) ein Halb-Nyquistfilter ist.

3. Schaltung nach Anspruch 1 oder 2, dadurch gekennzeichnet, daß die RII- und RIF-Filter derart kombiniert sind, daß die Signaldynamik verringert und überall die gleiche Dynamik angewendet wird.

4. Schaltung nach einem der Ansprüche 1 bis 3, dadurch gekennzeichnet, daß das in einer nicht-kausalen Weise ausgebildete RII-Filter (16; 16A; 16B) eine konjugiert komplexe Art des kausalen RII-Filters (15; 15A; 15B) ist, derart, daß nach der Verarbeitung durch die beiden RII-Filter das Videosignal bei einer im wesentlichen linearen Phase verbleibt.

5. Schaltung nach einem der Ansprüche 1 bis 4, dadurch gekennzeichnet, daß das in einer nicht-kausalen Weise ausgebildete RII-Filter (16; 16A; 16B) Abtastmittel (3) für das Videosignal, Mittel (20) zur Zerlegung des abgetasteten Videosignals in Bereiche mit einer vorbestimmten Zeitdauer (LT), Mittel zur Zeitinversion (19) der Abtastwerte der zerlegten Bereiche vor der Filterung und zweite Mittel zur Zeitinversion (29) nach der Filterung aufweist.

6. Schaltung nach Anspruch 5, dadurch gekennzeichnet, daß jedes Mittel zur Zeitinversion der Abtastwerte vor und nach der Filterung durch einen LIFO-Speicher (19, 29) gebildet ist.

7. Schaltung nach Anspruch 6, dadurch gekennzeichnet, daß das nicht-kausale Filter (16; 16A; 16B) folgendes enthält: zwei an den Ausgang eines ersten LIFO-Speichers (19) angeschlossene parallele Wege (22a, 22b), wobei jeder Weg ein identisches digitales RII-Filter (24a, 24b) aufweist, wobei ein mit einer Taktfrequenz (LT) arbeitendes Verteilermittel (20), die gleich dem L-fachen der Abtastperiode (T) ist, vorgesehen ist, um abwechselnd ein Filter (24a, 24b) am Ausgang des LIFO-Speichers (19) mit einem der beiden Wege (22a, 22b) zu verbinden und das andere Filter (24b, 24a) mit dem anderen Weg mit einer Übertragung (23) von Nullen mit derselben Dauer wie der zerlegte Bereich zu verbinden, daß ein zweites Verteilmittel (26), das mit derselben Taktfrequenz wie das erste hinter den beiden parallelen Filtern (24a, 24b) vorgesehen ist, um abwechselnd den Ausgang des Filters (24a, 24b), das die Abtastwerte des in des zeitinvertierten zerlegten Bereichs mit einer Verzögerungseinheit (27) verbindet, die eine Verzögerung (2LT) gleich dem zweifachen der Dauer eines Bereiches einführt, daß der Ausgang dieser Verzögerungseinheit (27) mit einem Eingang einer Addierstufe (28) verbunden ist, deren anderer Eingang über das zweite Verteilmittel (26) mit dem Ausgang des Filters (24b, 24a) verbunden ist, das die Reihe der Nullen empfängt, und daß der Ausgang der Addierstufe (28) mit dem zweiten LIFO-Speicher (29) verbunden ist, der die zeitliche Reihenfolge der gefilterten Abtastwerte wiederherstellt.

8.  Schaltung nach Anspruch 7, dadurch gekennzeichnet, daß die Anzahl L derart gewählt ist, daß die Dauer (LT), die gleich dem Produkt aus L und der Abtastperiode ist, dafür ausreicht, daß der Abschnitt des gefilterten Signals am Ende des Durchlaufs der Folge von Nullen vernachlässigbar ist.

9.  Schaltung nach einem der vorangehenden Ansprüche, dadurch gekennzeichnet, daß das RIF-Filter und das kombinierte RII-Filter derart in kleine Filterzellen zerlegt sind, daß das Polynom der Gesamt-Übertragungsfunktion für jedes Filter gleich einem Produkt mehrerer Polynome niedrigerer Ordnung ist, daß die Gesamt-Übertragungsfunktion durch eine Funktion gebildet ist, daß das RIF-Filter einem Polynom ($N(Z)$) des Zählers und das kombinierte RII-Filter dem Polynom ($D(Z)$) des Nenners des Bruchteils entspricht.

10. Schaltung nach Anspruch 9, dadurch gekennzeichnet, daß das RIF-Filter in fünf Zellen zerlegt ist, von denen jede eine Übertragungsfunktion $N_1(Z)$, $N_2(Z)$, $N_3(Z)$, $N_4(Z)$, $N_5(Z)$ vierter Ordnung aufweist, während das RII-Filter, dessen Übertragungsfunktion $D(Z)$ im Nenner steht, in drei Zellen mit einer Übertragungsfunktion $D_1(Z)$, $D_2(Z)$, $D_3(Z)$ zweiter Ordnung zerlegt ist.

11. Schaltung nach Anspruch 10, dadurch gekennzeichnet, daß das resultierende RIF-Filter eine durch die folgende Gleichung beschriebene Charakteristik aufweist:

$$N(Z)\, N(Z^{-1}) = N^*_1(Z)\, N^*_2(Z)\, N^*_3(Z)\, N^*_4(Z)\, N^*_5(Z)$$

mit:

$$N^*_1(Z) = N_1(Z)\, N_1(Z^{-1}),\quad N^*_2(Z) = N_2(Z)\, N_2(Z^{-1}),$$
$$N^*_3(Z) = N_3(Z)\, N_3(Z^{-1}),\quad N^*_4(Z) = N_4(Z)\, N_4(Z^{-1}),$$
$$N^*_5(Z) = N_5(Z)\, N_5(Z^{-1})$$

12. Schaltung nach Anspruch 10 oder 11, dadurch gekennzeichnet, daß die Koeffizienten der Zellen des RIF-Filters die folgenden sind:

$$\beta^{(1)}_k = [377,\ 638,\ 1024,\ 638,\ 377]$$

$$\beta^{(2)}_k = [94,\ 349,\ 512,\ 349,\ 94]$$

$$\beta^{(3)}_k = [71,\ 177,\ 256,\ 177, 71]$$

$$\beta^{(4)}_k = [34,\ 159,\ 256,\ 159,\ 34]$$

$$\beta^{(5)}_k = [19, -155, 512, -155,\ 19]$$

während die Koeffizienten des RII-Filters die folgenden sind:

$$\alpha^{(1)}_{k} = [76, 128, 63]$$

$$\alpha^{(2)}_{k} = [128, 82, 114]$$

$$\alpha^{(3)}_{k} = [128,62,66].$$

**13.** Schaltung nach Anspruch 11 oder 12, dadurch gekennzeichnet, daß die Schaltung aus Unterfiltern (Figur 16) besteht, deren Übertragungsfunktionen die folgenden sind:

$$H_a(Z) = N^*_4(Z)$$

$$H_b(Z) = D_1(Z) \, N^*_3(Z) \, D_2(Z) \, N^*_2(Z) \, D_3(Z)$$

$$H_c(Z) = D_1(Z) \, D_2(Z) \, D_3(Z)$$

$$H_d(Z) = N^*_1(Z) \, N^*_5(Z).$$

**14.** Schaltung nach Anspruch 11 oder 12, dadurch gekennzeichnet, daß sie aus Unterfiltern (Figur 17) besteht, deren Übertragungsfunktionen die folgenden sind:

$$H_1(Z) = N^*_4(Z) \, D_1(Z) \, N^*_3(Z) \, D_2(Z) \, N^*_2(Z) \, D_3(Z)$$

$$H_2(Z) = D_1(Z) \, D_2(Z) \, D_3(Z)$$

$$H_3(Z) = N^*_1(Z) \, N^*_5(Z).$$

**15.** Schaltung nach einem der vorangehenden Ansprüche, dadurch gekennzeichnet, daß die Abtastfrequenz ($f_s$) gleich oder im wesentlichen gleich ist:

$$(4 \, f_{Flmax} - 2 \, B_{CH})/3$$

wobei $f_{Flmax}$ gleich der maximalen Zwischenfrequenz ZF und $B_{CH}$ gleich der endgültigen Bandbreite ist.

**16.** Schaltung nach Anspruch 15, dadurch gekennzeichnet, daß die Abtastfrequenz ($f_s$) gleich oder im wesentlichen gleich 48,87 MHz ist.

## FIG. 1

## FIG. 2

## FIG. 6

FIG.3A

FIG.3B

FIG.3C

FIG.3D

**FIG. 4A**

**FIG. 4B**

**FIG. 4C**

**FIG. 4D**

**FIG. 4E**

EP 0 781 040 B1

**FIG. 5**

**FIG. 7**

**FIG. 8**

## FIG. 9

**FIG. 10**

EP 0 781 040 B1

## FIG. 11A

$z = e^{j\omega\tau}$

## FIG. 11B

$z = e^{j\omega\tau}$

FIG. 12A

FIG. 12B

FIG. 13A

$| D_1(z) N^*_4(z) |$

$z = e^{j\omega\tau}$

$f / (f_s/2) \rightarrow$

FIG. 13B

$| D_2(z) N^*_3(z) |$

$z = e^{j\omega\tau}$

$f / (f_s/2) \rightarrow$

FIG. 13C

$| D_3(z) N^*_2(z) |$

$z = e^{j\omega\tau}$

$f / (f_s/2) \rightarrow$

**FIG. 14A**

**FIG. 14B**

**FIG. 14C**

**FIG. 15A**

t / nτ  —>

**FIG. 15B**

t / nτ  —>

EP 0 781 040 B1

**FIG. 16**

16 A

$X_k(n)$

$H_a(z)$ → LIFO → 0 → $H_b(z)$ / $H_b(z)$ → Retard 2LT → $\Sigma$ → LIFO → 0 → $H_c(z)$ / $H_c(z)$ → $\Sigma$ → $H_d(z)$ → $Y_k(n)$

19

15 A

42

**FIG. 17**

16 B

$X_k(n)$

$H_1(z)$ → LIFO → 0 → $H_2(z)$ / $H_2(z)$ → Ret. 2LT → $\Sigma$ → LIFO → $H_3(z)$ → $Y_k(n)$

15 B

FIG. 18B

FIG. 18A

**FIG. 19A**

**FIG. 19B**

$$\beta_1 = b_1 2^m$$

$$\beta_2 = b_2 2^m$$

EP 0 781 040 B1